# EUROPÄISCHE PATENTSCHRIFT

(11) **EP 2 370 222 B1**
(45) Veröffentlichungstag und Bekanntmachung des Hinweises auf die Patenterteilung: **12.08.2015**
(21) Anmeldenummer: 09759898.1
(22) Anmeldetag: 25.11.2009
(51) Int. Cl.: B23B 29/04, B23B 31/26

(54) **WERKZEUGAUFNAHME**
TOOL HOLDER
PORTE-OUTIL

(30) Priorität: 27.11.2008 DE 102008060164; 20.05.2009 DE 102009022199
(43) Veröffentlichungstag der Anmeldung: 05.10.2011
(73) Patentinhaber: MAPAL Fabrik für Präzisionswerkzeuge Dr. Kress KG, 73431 Aalen (DE)
(72) Erfinder: REINAUER, Josef, 72488 Sigmaringen (DE)
(74) Vertreter: Gleiss, Alf-Olav
(86) Internationale Anmeldenummer: PCT/EP2009/008378
(87) Internationale Veröffentlichungsnummer: WO 2010/060603

(56) Entgegenhaltungen:
- EP-A1- 0 507 147
- DE-A1- 4 117 765
- DE-A1- 4 220 873
- DE-A1- 10 241 860
- DE-A1-102005 015 787

## Beschreibung

Die Erfindung betrifft eine Werkzeugaufnahme mit den Merkmalen des Anspruchs 1.

Werkzeugaufnahmen mit einer Hohlschaftkegel-Spannvorrichtung sind bekannt, wobei die Ausgestaltung des Hohlschaftkegels durch DIN und ISO vorgegeben sind. Eine solche Vorrichtung gemäß dem Oberbegriff des Anspruchs 1 ist aus DE 10 2005 015 787 bekannt. Werkzeugaufnahmen der hier angesprochenen Art dienen dazu, Werkzeuge, aber auch Adapter, Zwischenstücke und dergleichen, die mit einem Hohlschaftkegel versehen sind, aufzunehmen und mit einer Halterung fest zu verbinden. Auf diese Weise eingespannte Werkzeuge werden dazu verwendet, Werkstücke zu bearbeiten. Beispielsweise werden mit einem Drehstahl Späne von einem rotierenden Werkstück abgetragen. Dabei steht das Werkzeug still, das heißt es dreht sich nicht, beispielsweise um die Mittelachse der Werkzeugaufnahme. Werkzeugaufnahmen der hier angesprochenen Art können aber auch Werkzeuge so aufnehmen, dass diese zum Bohren, Reiben oder Fräsen eingesetzt werden können, wobei sie in der Regel in Rotation versetzt werden. Es hat sich herausgestellt, dass in vielen Fällen die axiale Baulänge, also die in Richtung der Mittelachse der Werkzeugaufnahme gemessene Länge, recht groß ist, was die Einsatzmöglichkeiten einer derartigen Werkzeugaufnahme einschränkt.

Aufgabe der Erfindung ist es daher, eine Werkzeugaufnahme zu schaffen, deren in Richtung der Mittelachse gemessene Baulänge relativ kurz ist, sodass sie auch unter beengten Raumverhältnissen Werkzeuge aufnehmen können, mit deren Hilfe dann Werkstücke bearbeitet werden.

Zur Lösung dieser Aufgabe wird eine Werkzeugaufnahme vorgeschlagen, welche die in Anspruch 1 genannten Merkmale aufweist. Sie umfasst also eine Hohlschaftkegel-Spannvorrichtung mit einer Mittelachse, einer Spanneinrichtung, einer Zugstange, die mit der Spanneinrichtung zusammenwirkt und mit einer Betätigungseinrichtung, mit der die Zugstange betätigt, das heißt verlagert, werden kann. Die Werkzeugaufnahme zeichnet sich dadurch aus, dass die Betätigungseinrichtung ein unter einem Winkel von vorzugsweise 90° zur Mittelachse bewegliches Betätigungselement aufweist, das mindestens ein Betätigungsteil umfasst. Entsprechend ist die Zugstange mit wenigstens einem Eingriffsteil versehen. Die Besonderheit der Werkzeugaufnahme besteht darin, dass das Betätigungs- und das Eingriffsteil ein Keilgetriebe bilden, das dazu dient, eine radiale Bewegung des Betätigungselements, also eine Verlagerung senkrecht zur Mittelachse, in eine axiale Verschiebung der Zugstange in Richtung der Mittelachse umzusetzen. Herkömmliche Zugstangen erstrecken sich durch die Werkzeugaufnahme und werden an ihrem im Inneren der Werkzeugaufnahme liegenden Ende erfasst und mit in axialer Richtung wirkenden Kräften beaufschlagt. Üblicherweise werden hier hydraulische, pneumatische oder auch elektrische Aktuatoren eingesetzt. Es wird deutlich, dass dadurch die axiale Baulänge der Werkzeugaufnahme sehr groß ist. Dadurch, dass hier die Bewegung der Zugstange über einen Keilgetriebe erfolgt, ist es möglich, die Baulänge der Werkzeugaufnahme sehr stark zu reduzieren.

Beim bevorzugten Ausführungsbeispiel der Werkzeugaufnahme ist vorgesehen, dass das Keilgetriebe doppelwirkend ausgebildet ist. Bei einer derartigen Ausführungsform ist es möglich, die Zugstange in zwei Richtungen zu bewegen und die Spanneinrichtung zu betätigen. Diese kann also nicht nur zum Festspannen des Hohlkegels eines Werkzeugs aktiviert werden, wobei deren mindestens eine Spannzange radial nach außen verlagert wird. Es ist vielmehr auch möglich, die Spannvorrichtung aktiv in ihre Löseposition zu verlagern, um den Hohlschaft eines Werkzeugs freizugeben. Besonders bevorzugt wird dabei die Zugstange weiter in Richtung auf das eingespannte Werkzeug bewegt, um dieses auszustoßen.

Bei einem besonders bevorzugten Ausführungsbeispiel ist vorgesehen, dass das Betätigungselement seitlich an der Zugstange angreift. Dabei kommt das Betätigungsteil des Betätigungselements mit dem Eingriffsteil der Zugstange in Wirkverbindung, um eine Axialbewegung der Zugstange auszulösen. Wird das Keilgetriebe also so ausgebildet, dass die Kräfte seitlich in die Zugstange eingeleitet werden, so bleibt deren im Inneren der Werkzeugaufnahme liegendes Ende frei, sodass dort ein Kühl-/Schmiermittel einleitbar ist. Dieses wird dann auf geeignete und bekannte Weise zu einer aktiven Schneide des eingespannten Werkzeugs geleitet, um diese zu kühlen und zu schmieren. Die erfindungsgemäße Ausgestaltung führt also nicht nur zu einer axialen Verkürzung der Baulänge der Werkzeugaufnahme, sondern ermöglicht auch die Durchleitung eines Kühl-/Schmiermittels ohne besonderen baulichen Aufwand. Überdies ist es möglich, eine Antriebswelle oder eine Schubstange oder ein sonstiges Betätigungselement durch die Zugstange hindurchzuführen.

Ein weiteres Ausführungsbeispiel der Werkzeugaufnahme zeichnet sich dadurch aus, dass eine Kühl-/Schmiermittel-Stelleinrichtung vorgesehen ist, mit deren Hilfe der Verlauf des Kühl-/Schmiermittels innerhalb der Werkzeugaufnahme beeinflussbar ist. Das Kühl-/Schmiermittel kann also auf verschiedene Wege von der Kühl-/Schmiermittelversorgung zum Werkzeug geleitet werden.

Ein bevorzugtes Ausführungsbeispiel der Werkzeugaufnahme zeichnet sich durch ein Kühl-/Schmiermittel-Rohr aus, das koaxial zur Mittelachse angeordnet und in die Zugstange eingesetzt ist und dazu dient, Kühl-/Schmiermittel an das eingespannte Werkzeug weiterzuleiten, insbesondere an einen im Werkzeug zentral ausgebildeten Kühl-/Schmiermittel-Kanal. In diesem Fall ist die Kühl-/Schmiermittel-Stelleinrichtung so eingestellt, dass das Kühl-/Schmiermittel von der Versorgungsquelle zu einem im Bereich der Mittelachse der Werkzeugaufnahme liegenden Kanalabschnitt geleitet wird, der im Inneren des Kühl-/Schmiermittel-Rohrs vorgesehen ist.

Weitere Ausgestaltungen der Werkzeugaufnahme ergeben sich aus den Unteransprüchen.

Die Erfindung wird im Folgenden anhand der Zeichnungen näher erläutert. Es zeigen:
- Figur 1: einen Längsschnitt durch die Werkzeugaufnahme, bei der die Hohlschaftkegel-Spannvorrichtung gespannt ist;
- Figur 2: einen Längsschnitt durch die Werkzeugaufnahme gemäß Figur 1, bei der die Hohlschaftkegel-Spannvorrichtung sich in ihrer Lösestellung befindet;
- Figur 3: einen Längsschnitt entlang einer gegenüber der Schnittebene gemäß Figur 1 und 2 gekippten Schnittebene, aus der eine Kühl-/Schmiermittel-Stelleinrichtung ersichtlich ist;
- Figur 4: eine Draufsicht auf die Stirnseite der in den Figuren 1 bis 3 wiedergegebenen Werkzeugaufnahme, die Teil eines Sternrevolvers ist;
- Figur 5: einen Schnitt durch eine Werkzeugaufnahme in einer Ebene, in der sich die Kühl-/Stelleinrichtung befindet, wobei hier ein gegenüber den vorangegangenen Figuren abgewandeltes Ausführungsbeispiel wiedergegeben ist;
- Figur 6: einen Detailschnitt durch die Kühl-/Schmiermittel-Stelleinrichtung, bei dem die Schnittebene gegenüber Figur 5 um 90° gedreht ist;
- Figur 7: eine Stirnansicht der Werkzeugaufnahme gemäß Figur 5, die hier als Trommelrevolver ausgebildet ist;
- Figur 8: eine perspektivische Explosionsdarstellung eines Teils der in den Figuren 5 bis 7 dargestellten Werkzeugaufnahme;
- Figur 9: eine perspektivische Ansicht der Kühl-/Schmiermittel-Stelleinrichtung, die bei dem Ausführungsbeispiel der Werkzeugaufnahme nach den Figuren 1 bis 4 Verwendung findet;
- Figur 10: eine perspektivische Ansicht eines weiteren Ausführungsbeispiels einer Kühl-/Schmiermittel-Stelleinrichtung in einer ersten Funktionsstellung;
- Figur 11: ein Längsschnitt durch die Kühl-/Schmiermittel-Stelleinrichtung aus Figur 10;
- Figur 12: eine Stirnansicht eines weiteren Ausführungsbeispiels einer Werkzeugaufnahme;
- Figur 13: einen Schnitt durch die Werkzeugaufnahme aus Figur 12 in eine Ebene, in der die Kühl-/Schmiermittel-Stelleinrichtung angeordnet ist;
- Figur 14: eine perspektivische Ansicht der Kühl-/Schmiermittel-Stelleinrichtung aus Figur 10 in einer zweiten Funktionsstellung;
- Figur 15: einen Längsschnitt durch die Kühl-/Schmiermittel-Stelleinrichtung aus Figur 14;
- Figur 16: eine Stirnansicht der Werkzeugaufnahme gemäß Figur 12, bei der die Kühl-/Schmiermittel-Stelleinrichtung ihre zweite Funktionsstellung einnimmt, und
- Figur 17: einen Schnitt durch die Werkzeugaufnahme aus Figur 16 in einer Ebene, in der die Kühl-/Schmiermittel-Stelleinrichtung angeordnet ist.

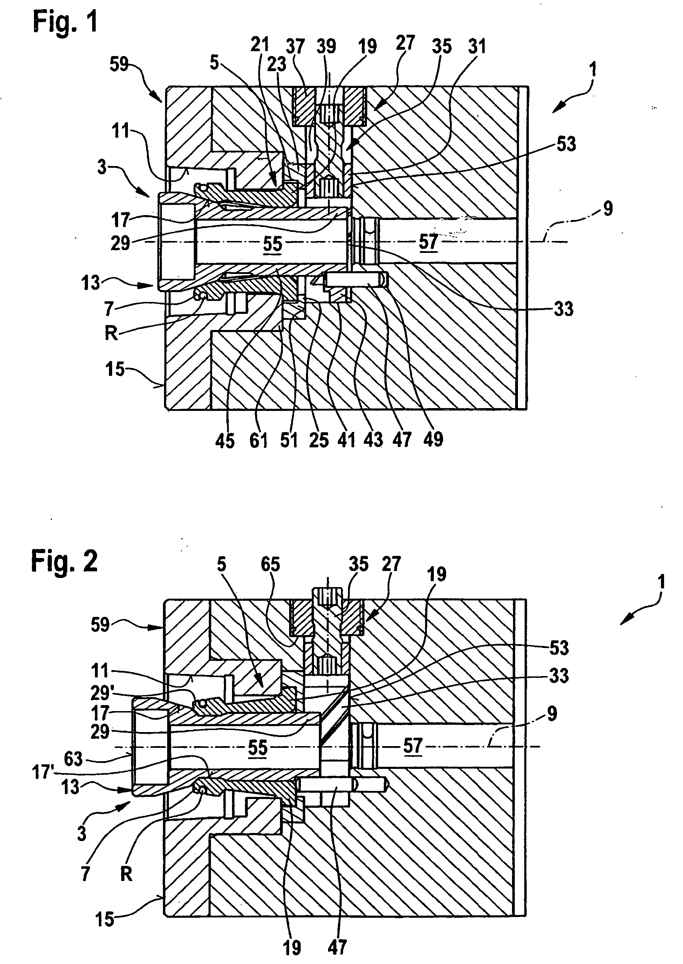

Figur 1 zeigt eine Werkzeugaufnahme 1 mit einer Hohlschaftkegel-Spannvorrichtung 3. Diese umfasst eine Spanneinrichtung 5, welche mindestens eine Spannzange 7 umfasst. Um möglichst gleichmäßig Spannkräfte auf einen Hohlschaft eines in der Werkzeugaufnahme 1 festzuspannendes, hier nicht dargestelltes Werkzeug einleiten zu können, weist die Spanneinrichtung in der Regel mehrere konzentrisch zu einer Mittelachse 9 der Werkzeugaufnahme 1 in gleichem Abstand zueinander angeordnete Spannzangen 7 auf. Diese greifen in den Hohlschaft des hier nicht dargestellten Werkzeugs ein und wirken mit auf der Innenseite des Hohlschafts vorgesehen Spannflächen zusammen, die so ausgebildet sind, dass im Wesentlichen radial von den Spannzangen 7 ausgehende Kräfte, die also senkrecht zur Mittelachse 9 wirken, aufgespalten werden in eine Kraftkomponente, die radial nach außen wirkt und den Hohlschaftkegel gegen eine Aufnahmefläche der Werkzeugaufnahme 1 anpressen und in Kräfte, die den Hohlschaft des Werkzeugs in Richtung der Mittelachse 9 in die Werkzeugaufnahme 1 hineinziehen. Spanneinrichtungen mit Spannzangen der hier angesprochenen Art sind bekannt, sodass darauf nicht weiter eingegangen wird.

Die Werkzeugaufnahme 1 weist eine in Richtung der Mittelachse 9 und vorzugsweise konzentrisch zu dieser angeordnete Zugstange 13 auf, die sich ausgehend von der Stirnseite 15 der Werkzeugaufnahme 1 in deren Inneres erstreckt. Die Zugstange 13 ist vorzugsweise rotationssymmetrisch ausgebildet und weist einen konisch ausgebildeten ersten Außenflächenabschnitt 17 auf, der sich in Richtung zur Stirnseite 15 aufweitet und an dem die mindestens eine Spannzange 7 anliegt. Wird die Zugstange 13 in das Innere der Werkzeugaufnahme 1, in Figur 1 nach rechts, verlagert, so gleitet die mindestens eine Spannzange 7 auf dem ersten Außenflächenabschnitt 17 entlang und wird von diesem radial nach außen gedrückt. Die mindestens eine Spannzange weist ein dem ersten Außenflächenabschnitt 17 gegenüberliegendes Ende 19 auf, das in einem Aufnahmeabschnitt 21 untergebracht ist, der so ausgebildet ist, dass die mindestens eine Spannzange bei einer Bewegung der Zugstange 13 nach rechts nicht in Richtung der Mittelachse 9 ausweichen, aber im Bereich des Endes 19 verschwenken kann.

Der Aufnahmeabschnitt 21 für die mindestens eine Spannzange 7 wird durch eine Distanzscheibe 23 gebildet, die konzentrisch zur Mittelachse 9 angeordnet und einen Innenraum umschließt, der den Aufnahmeabschnitt 21 umgibt. Ein in Figur 1 rechts liegender Bereich des Innenraums weist einen kleineren Innendurchmesser auf, sodass eine axiale Anschlagschulter 25 gebildet wird, an der die mindestens eine Spannzange 7 anliegt und nicht in Richtung der Mittelachse 9 - in Figur 1 nach rechts - ausweichen kann.

Aus Figur 1 ist eine Betätigungseinrichtung 27 zu erkennen, die dazu dient, die Zugstange 13 in Richtung der Mittelachse 9 der Werkzeugaufnahme 1 zu verlagern. Sie ist, von der Stirnseite 15 aus gesehen, tiefer in der Werkzeugaufnahme 1 angeordnet und wirkt mit dem über die Distanzscheibe 23 in das Innere der Werkzeugaufnahme 1 ragenden Ende 29 der Zugstange 13 zusammen. Sie weist ein auch als Schubhülse bezeichnetes Betätigungselement 31 auf, das hier senkrecht zur Mittelachse 9 der Werkzeugaufnahme 1 verlagerbar ist. Es wird sich zeigen, dass es auch unter einem Winkel zu dieser Mittelachse 9 verschiebbar ausgebildet sein kann. Es weist mindestens ein Betätigungsteil 33 auf, das mit einem an der Zugstange 13 vorgesehenen, hier nicht erkennbaren Eingriffsteil zusammenwirkt und ein Keilgetriebe bildet. Dieses ist so ausgelegt, dass das Betätigungsteil 33 bei einer radialen Verlagerung des Betätigungselements 31 eine axiale Verschiebung, das heißt eine Verschiebung in Richtung der Mittelachse 9, der Zugstange 13 bewirkt wird.

In Figur 1 ist das Betätigungselement in einer Position nahe der Mittelachse 9 angeordnet, also nach innen in die Werkzeugaufnahme 1 verlagert. Dadurch wird die Zugstange 13 in Figur 1 nach rechts verlagert, also ebenfalls in das Innere der Werkzeugaufnahme 1 hinein. Dadurch gleitet die mindestens eine Spannzange 7, die in axialer Richtung nicht ausweichen kann, auf dem ersten Außenflächenabschnitt 17 entlang und wird radial nach außen gedrängt, in seine Spannstellung, in der ein hier nicht dargestellter Hohlschaft eines Werkzeugs fest mit der Werkzeugaufnahme 1 verspannt wird.

Bei dem in Figur 1 wiedergegeben Ausführungsbeispiel werden alle Spannzangen der Spanneinrichtung 5 gemeinsam radial nach außen verlagert, sodass der Hohlschaft des Werkzeugs sehr gleichmäßig mit einer von innen wirkenden Kraft beaufschlagt und exakt in Bezug auf die Werkzeugaufnahme 1 gehalten und ausgerichtet wird.

Das Betätigungselement 31 wird durch einen geeigneten Antrieb bezüglich der Mittelachse 9 ein- und auswärtsbewegt. Dabei ist es möglich, einen hydraulischen, pneumatischen, elektrischen Antrieb oder dergleichen zu verwenden. Besonders einfach realisierbar ist eine manuelle Verlagerung des Betätigungselements 31 mittels einer vorzugsweise als Differenzialschraube ausgebildeten Gewindespindel 35, die, was aus dem Stand der Technik bekannt ist, mit zwei Außengewindebereichen ausgestattet sein kann, welche ein gegenläufiges Gewinde aufweisen. Ein erster Gewindeabschnitt wirkt mit dem Betätigungselement 31 zusammen, ein zweiter Gewindeabschnitt greift in die Werkzeugaufnahme 1 ein. Aus fertigungstechnischen Gründen ist bei dem hier dargestellten bevorzugten Ausführungsbeispiel der Werkzeugaufnahme 1 ein Gewindeelement 37 vorgesehen, das in der Werkzeugaufnahme 1 verankerbar und mit einem Innengewinde versehen ist, das mit dem Außengewinde der Gewindespindel 35 zusammenwirkt. Vorzugsweise ist das Gewindeelement 37 als Gewindering ausgebildet, der in der Werkzeugaufnahme 1 mittels eines Außengewindes verankerbar ist.

Beim Zusammenbau der Werkzeugaufnahme 1 wird das Betätigungselement 31 in das Innere der Werkzeugaufnahme 1 eingeführt, bevor andere Elemente der Hohlschaftkegel-Spannvorrichtung 3 eingebaut werden. Es ist dann möglich, über eine von außen zugängliche Öffnung 39 die Gewindespindel 35 in das Betätigungselement 31 über einen gewünschten Bereich einzuschrauben, und dann, während die Gewindespindel 35 gehalten wird, den Gewindering in die Werkzeugaufnahme 1 einzuschrauben und zu fixieren. Auf diese Weise kann sich dann die Gewindespindel 35 einerseits am Betätigungselement 31 und andererseits an der Werkzeugaufnahme 1 abstützen, wenn es darum geht, das Betätigungsteil 33 gegenüber der Mittelachse 9 zu verlagern.

Die Zugstange 13 ist vorzugsweise im Innern der Werkzeugaufnahme 1 so gelagert, dass sie in radialer Richtung zur Mittelachse 9 abgestützt ist. Bei einer Einwärtsbewegung des Betätigungselements 31 werden über das Betätigungsteil 33 radiale Kräfte in das Ende 29 der Zugstange 13 eingeleitet. Diese kann sich an einem Widerlager 41 über einen Vorsprung 43 abstützen, der vom Grundkörper 45 der Zugstange 13 ausgeht und sich - in Figur 1 - von der Mittelachse 9 aus gesehen nach unten erstreckt und an dem Widerlager 41 anliegt.

Wird das Betätigungselement 31 radial nach außen bewegt, so wird über das Keilgetriebe eine in radialer Richtung - in Figur 1 nach oben - wirkende Kraft in das Ende 39 der Zugstange 13 eingeleitet. Die dadurch induzierte Kippbewegung der Zugstange 13 kann eine ungleichmäßige Krafteinwirkung der Zugstange 13 auf die mindestens eine Spannzange 7 verursachen. Um dies zu verhindern, kann in im Wesentlichen parallel zur Mittelachse 9 verlaufender Stift 47 vorgesehen werden, der im Vorsprung 43 verankert ist und in einer geeigneten Ausnehmung 49 in der Werkzeugaufnahme 1 gleitet. Denkbar ist es aber auch, den Stift 47 in der Werkzeugaufnahme 1 zu verankern und eine Gleitpassung zwischen dem Stift 47 und der Ausnehmung 49 bereitzustellen. Auf jeden Fall stellt der Stift 47 sicher, dass eine axiale Verlagerung der Zugstange 13 in Richtung der Mittelachse 9 nicht behindert wird, dass diese aber bei einer Einund/oder Auswärtsbewegung des Betätigungselements 31 in radialer Richtung gehalten und abgestützt, außerdem geführt wird.

Aus Figur 1 ist noch ersichtlich, dass sich das Betätigungselement 31 auf der innen liegenden Seitenfläche der Distanzscheibe 23 gleitend abstützt. Andererseits wird das Betätigungselement 31 von einer Stützfläche 53 im Inneren der Werkzeugaufnahme 1 geführt. Dies führt zu einem sehr kompakten Aufbau der Werkzeugaufnahme 1. Es zeigt sich, dass die Zugstange 13 die Spanneinrichtung 5 im Inneren der Werkzeugaufnahme 1 nur wenig überragt und dass das freie Ende 29 nur so weit über die Distanzscheibe 23 hinaussteht, dass das Betätigungselement 31 mit dem Ende 29 zusammenwirken kann.

Grundsätzlich ist es möglich, das freie Ende 29 der Zugstange 13 mit einer Abschlusswand zu versehen und hier ein mit dem Betätigungselement 31 zusammenwirkendes Keilgetriebe vorzusehen Die Zugstange 13 könnte in diesem Fall kürzer ausgebildet werden, als dies in Figur 1 dargestellt ist.

Das hier dargestellte Ausführungsbeispiel der Werkzeugaufnahme 1 zeichnet sich aber dadurch aus, dass die Betätigungseinrichtung 31 nicht in dem Bereich der rechten Stirnfläche der Zugstange 13 eingreift, sondern auf der Außenseite am Ende 29 der Zugstange 13. Dadurch ist es möglich, die Zugstange 13 hohl auszubilden und am Ende 29 offenzulassen. Damit korrespondiert der Innenraum 55 der Zugstange 13 mit einem Hohlraum 57 in der Werkzeugaufnahme 1, wobei der Innenraum 55 und der Hohlraum 57 fluchtend und koaxial zur Mittelachse 9 ausgebildet sind. Es ist daher möglich, durch die Werkzeugaufnahme 1 hindurch eine Antriebswelle, eine Schubstange oder ein sonstiges auch als Antriebsorgan bezeichnetes Betätigungselement zu führen, das hier nicht dargestellt ist und durch den Innenraum 55 der Zugstange 13 in ein in die Werkzeugaufnahme 1 eingestecktes Werkzeug eingreift. Es kann hier also ein Werkzeug vorgesehen werden, das mindestens eine rotierende Schneide zur Bearbeitung eines Werkstücks aufweist, sodass ein Bohren, Reiben, Fräsen oder dergleichen möglich ist. Über eine Schubstange, die axial in der Zugstange 13 verlagerbar ist, können Schub- und/oder Zugkräfte auf das Werkzeug ausgeübt werden, um dort Teilwerkzeuge oder dergleichen zu betätigen.

Es zeigt sich also, dass das hier dargestellte Ausführungsbeispiel der Werkzeugaufnahme 1 sehr kurz baut und dass durch die besondere Ausgestaltung der Betätigungseinrichtung 27 die Zugstange 13 hohl ausgebildet werden kann, sodass die Durchführung einer Antriebswelle bis zu dem in die Werkzeugaufnahme 1 eingesetzten Werkzeug möglich ist. In die hier beschriebene Werkzeugaufnahme 1 können also nicht nur Werkzeuge mit einer feststehenden Schneide beispielsweise zum Drehen eingesetzt werden. Es ist vielmehr auch möglich, Werkzeuge aufzunehmen, mit denen Bohrungen erzeugt und/oder bearbeitet werden können oder aber Fräser zu verwenden, die der entsprechenden Bearbeitung eines Werkstücks dienen. Es können auch Werkzeuge in die Werkzeugaufnahme 1 eingesetzt werden, die Schieber oder dergleichen umfassen, die gegenüber dem Werkzeug durch von der Schubstange induzierte Kräfte verlagerbar sind.

Die in Figur 1 dargestellte Werkzeugaufnahme 1 weist einen Einbauflansch 59 auf, der die Werkzeugaufnahme 1 in dem Bereich stirnseitig abdeckf, in den das aufzunehmende Werkzeug in die Werkzeugaufnahme 1 einführbar ist. Er reicht hier in das Innere der Werkzeugaufnahme 1 hinein, schließt das Betätigungselement 31 und die Distanzscheibe 23 in der Werkzeugaufnahme 1 ein und fixiert die genannten Elemente dort. Er ist im Übrigen so ausgebildet, dass die mindestens eine Spannzange 7 im Aufnahmeabschnitt 21 gehalten wird. Er weist dazu an seinem an die Distanzscheibe 23 angrenzenden Ende 61 einen Innendurchmesser auf, der kleiner ist als der des Aufnahmeabschnitts 21. Es wird also zwischen dem Ende 61 und der Anschlagschulter 25 der Distanzscheibe 23 ein Aufnahmebereich geschaffen, in dem das Ende 19 der mindestens einen Spannzange 7 so gehalten wird, dass es in axialer Richtung, also in Richtung der Mittelachse 9, nicht verlagerbar ist, aber verschwenkt werden kann. Die Zugstange 13 weist einen derartigen Außendurchmesser auf, dass sie die mindestens eine Spannzange 7 sicher im Aufnahmeabschnitt 21 hält, sodass sie nicht radial nach innen, also in Richtung auf die Mittelachse 9, ausweichen kann.

Es wird hier also auf einfache Weise zwischen der Außenfläche der Zugstange 13 und dem Ende 61 des Einbauflansches 59, das im Inneren der Werkzeugaufnahme 1 angeordnet ist, und der Distanzscheibe 23 eine einfache und sichere Halterung für die Spanneinrichtung 5 und deren mindestens eine Spannzange 7 geschaffen.

Figur 2 zeigt das in Figur 1 wiedergegebene Ausführungsbeispiel der Werkzeugaufnahme 1. Gleiche Teile sind mit gleichen Bezugsziffern versehen, sodass auf die Beschreibung zu Figur 1 verwiesen wird.

In Figur 2 ist die Spanneinrichtung 5 in ihrer Lösestellung wiedergegeben, also in der Stellung, in der ein Hohlschaftkegel eines Werkzeugs ohne Weiteres in die Werkzeugaufnahme 1 eingesteckt oder aus dieser herausgenommen werden kann. Die mindestens eine Spannzange 7 ist um ihr Ende 29 so verschwenkt, dass ihr Kopf 29' nach innen in Richtung auf die Mittelachse 9 um das Ende 29 verschwenkt ist. Der Kopf 29' liegt also nicht mehr auf dem ersten Außenflächenabschnitt 17 der Zugstange 13 auf, sondern auf einem zweiten Außenflächenabschnitt 17', der durch eine Vertiefung in der Außenfläche der Zugstange 13 gebildet wird und einen kleineren Außendurchmesser als der erste Außenflächenabschnitt 17 aufweist. Der Kopf 29' der mindestens einen Spannzange 7 liegt damit so weit innen, dass der Hohlschaft eines Werkzeugs leicht und ohne Behinderung in das Innere der Werkzeugaufnahme 1 beziehungsweise des Einbauflansches 59 eingeführt werden kann.

Um eine Zurückverlagerung des Kopfes 29' der mindestens einen Spannzange 7 in Richtung auf die Mittelachse 9 zu ermöglichen, wird die Zugstange 13 in Richtung der Mittelachse 9 aus der Werkzeugaufnahme 1 nach außen verlagert, in Figur 2 nach links. Dies wird dadurch bewirkt, dass das Betätigungselement 31 der Betätigungseinrichtung 27 mithilfe der Gewindespindel 35 von der Mittelachse 9 nach außen verlagert wird. Damit wird auch das Betätigungsteil 33 des Betätigungselements 31 nach außen verlagert. Da dieses mit einem hier nicht sichtbaren Eingriffselement der Zugstange 13 ein Keilgetriebe bildet, wird die Auswärtsbewegung des Betätigungselements 31 umgesetzt in eine axiale Verlagerung der Zugstange 13 nach links.

Der Verlagerungsweg der Zugstange 13 kann so gewählt werden, dass ihre Stirnfläche 63 an dem hier nicht dargestellten Werkzeug anschlägt und dieses aus der Werkzeugaufnahme 1 ausstößt.

Die Werkzeugaufnahme 1 zeichnet sich also dadurch aus, dass die mittels eines Keilgetriebes in Richtung der Mittelachse 9 bewegliche Zugstange 13 bei einer Bewegung in eine erste Richtung, in Figur 1 nach rechts, die Einspannung eines Werkzeugs in der Werkzeugaufnahme 1 bewirkt, und bei einer Bewegung in die entgegengesetzte Richtung, in Figur 2 nach links, das eingespannte Werkzeug freigibt und bei entsprechender Auslegung auch aus der Werkzeugaufnahme 1 ausstößt. Es zeigt sich hier, dass das Betätigungselement 31 nicht genau senkrecht zur Mittelachse 9 bewegt zu werden braucht. Bei entsprechender Ausgestaltung des Keilgetriebes kann der Bewegungsweg des Betätigungsteils 31 auch unter einem Winkel zur Mittelachse 9 verlaufen.

Bei der Axialbewegung der Zugstange 13 wird diese durch den Stift 47 nicht nur in radialer Richtung abgestützt, sondern auch in axialer Richtung, also in Richtung der Mittelachse 9, geführt.

In der auch als Freigabestellung bezeichneten Lösestellung der Spanneinrichtung 5 wird die mindestens eine Spannzange 7 also nicht mit einer radial nach außen wirkenden Kraft beaufschlagt. Es ist vielmehr ohne Weiteres möglich, dass sie in Richtung auf die Mittelachse 9 ausweicht, wenn ein Hohlschaft eines Werkzeugs in die Werkzeugaufnahme 1 eingeschoben oder aus dieser herausgezogen wird.

Vorzugsweise ist eine Zwangsrückführung der mindestens einen Spannzange 7 vorgesehen. Dies wird hier dadurch erreicht, dass im Bereich des Kopfes 29' der mindestens einen Spannzange 7 ein elastisches Rückholelement R vorgesehen ist, das auf geeignete Weise gegen Verrutschen fixiert ist. Es kann als O-Ring, als Ring- oder als Wurmfeder ausgebildet sein. Hier ist vorgesehen, dass außen in der mindestens einen Spannzange 7 eine Nut vorhanden ist, in die das Rückholelement R, beispielsweise ein O-Ring, eingelegt ist. Werden, wie bei dem hier dargestellten bevorzugten Ausführungsbeispiel, mehrere in einem gleichen Umfangsabstand zueinander angeordnete Spannzangen 7 zur Realisierung der Spanneinrichtung 5 vorgesehen, so umgreift das Rückholelement R alle Spannzangen und zieht diese in Richtung auf die Mittelachse 9 zurück, sobald keine nach außen wirkenden Kräfte durch die Zugstange 13 aufgebaut werden.

Die Rückstellkräfte für die mindestens eine Spannzange 7 können aber auch auf andere geeignete Weise realisiert werden, beispielsweise dadurch, dass die mindestens eine Spannzange 7 an ihrem Ende 19 mit einer Vorspannkraft beaufschlagt wird, welche den Kopf 29' in Richtung auf die Mittelachse 9 drängt, sodass dieser an dem zweiten Außenflächenbereich 17' der Zugstange 13 anliegt.

Aus Figur 2 wird deutlich, dass das Keilgetriebe auf zwei Arten realisierbar ist: Es ist zum Einen möglich, das Betätigungsteil 33 am Betätigungselement 31 durch eine Nut zu realisieren, in die ein als Vorsprung ausgebildetes Eingriffsteil an der Zugstange 13 eingreift. Zum Anderen ist auch eine Funktionsumkehr denkbar, nämlich dass an dem Betätigungselement ein als Betätigungsteil 33 dienender Vorsprung vorgesehen ist, der in eine Nut an der Zugstange 13 angreift, die deren Eingriffsteil realisiert. In beiden Fällen ist, wie aus Figur 2 ersichtlich, das Betätigungsteil 33 unter einem Winkel, vorzugsweise unter einem spitzen Winkel, zur Mittelachse 9 geneigt. Entsprechend ist das Eingriffsteil an der Zugstange 13 geneigt, um das Keilgetriebe zu realisieren.

Die Auswärtsbewegung der Zugstange 13, in Figur 2 nach links, wird dadurch bewirkt, dass das Betätigungselement 31 von der Mittelachse 9 nach außen verlagert wird. Dies erfolgt dadurch, dass die Gewindespindel 35 in Rotation versetzt wird, wobei ihr Außengewinde mit dem Betätigungselement 31 und mit dem als Gewindering ausgebildeten Gewindeelement 37 kämmt. Bei entsprechender Drehrichtung wird das Betätigungselement 31 nach außen gezogen, weil das Gewindeelement 37 durch eine Schulter 65 daran gehindert wird, sich in Richtung auf die Mittelachse 9 zu verlagern. Ist das Gewindeelement 37 mit einem Außengewinde versehen, so hält sich dieses entsprechend an einem Innengewinde der Werkzeugaufnahme 1, sodass dann grundsätzlich auf die Schulter 65 verzichtet werden könnte.

Grundsätzlich ist es möglich, dass die Zugstange 13 auch durch ein Federelement in die Löse- oder Spannstellung bewegt wird. In diesem Fall braucht das Keilgetriebe nur Kräfte aufzubringen, die dem Federelement entgegenwirken, um die Zugstange 13 in die Spann- oder Lösestellung zu verlagern. Es ist dann nicht erforderlich, ein doppelwirkendes Keilgetriebe zu realisieren.

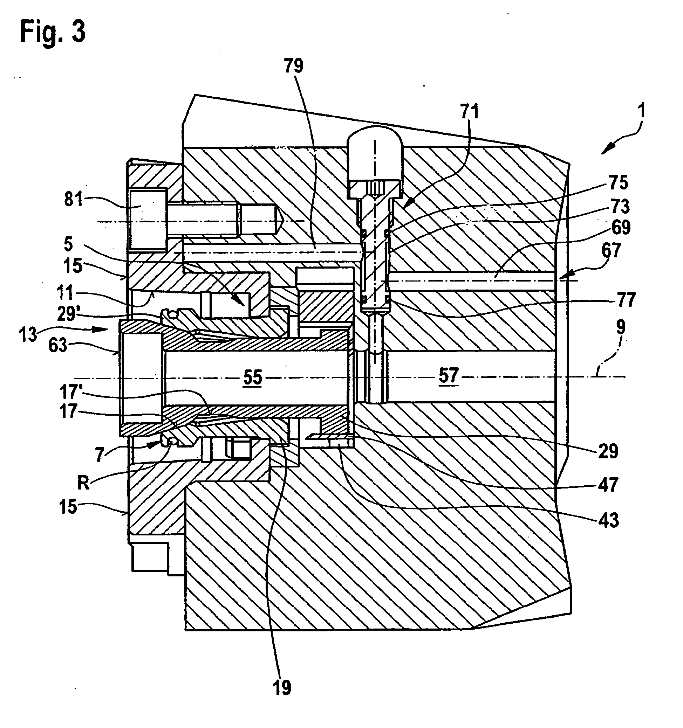

Figur 3 zeigt das anhand der Figuren 1 und 2 erläuterte Ausführungsbeispiel der Werkzeugaufnahme 1 im Längsschnitt. Hier ist die Schnittebene gegenüber der in den Figuren 1 und 2 verschwenkt. Gleiche Teile sind mit gleichen Bezugsziffern versehen, sodass insofern auf die vorangegangene Beschreibung verwiesen wird.

In Figur 3 wird deutlich, dass die Werkzeugaufnahme 1 eine Kühl-. /Schmiermittelzufuhr 67 aufweist, über die ein Kühl-/Schmiermittel in die Werkzeugaufnahme 1 eingespeist wird. Dieses Medium wird über einen Kühl-/Schmiermittelkanal 69 im Inneren der Werkzeugaufnahme 1 geführt, der zu einer Kühl-/Schmiermittel-Stelleinrichtung 71 führt. Unter einem Winkel zum Kühl-/Schmiermittelkanal 69 verläuft ein erster Abschnitt 73, hier vorzugsweise praktisch senkrecht zur Mittelachse 9. Er öffnet sich nach außen, sodass in diesen ersten Abschnitt 73 die Kühl-/Schmiermittel-Stelleinrichtung 71 einführbar ist. Vorzugsweise ist der erste Abschnitt 73 als zylindrische Bohrung ausgeführt, in die der zylindrisch ausgestaltete Grundkörper der Kühl-/Schmiermittel-Stelleinrichtung 71 eingeführt ist. Vorzugsweise weist der Grundkörper der Kühl-/Schmiermittel-Stelleinrichtung 71 ein Außengewinde auf, das mit einem Innengewinde in der Werkzeugaufnahme 1 kämmt. Denkbar ist es aber auch, dass hier ein lediglich gestecktes Element in den ersten Abschnitt 73 eingebracht wird.

Die Kühl-/Schmiermittel-Stelleinrichtung 71 weist einen ersten Dichtabschnitt 75 auf, welcher den ersten Abschnitt 73, der mit dem Kühl-/Schmiermittelkanal 69 in Fluidverbindung steht, nach außen abdichtet.

In einem Abstand zum ersten Dichtabschnitt 75 ist ein zweiter Dichtabschnitt 77 an der Kühl-/Schmiermittel-Stelleinrichtung 71 vorgesehen, der den ersten Abschnitt 75 nach innen dichtet, sodass das Medium nicht in Richtung auf die Mittelachse 9 austreten kann.

Der erste Abschnitt 73 der Kühl-/Schmiermittel-Zufuhr 67 steht in Fluidverbindung mit dem Kühl-/Schmiermittel-Kanal 69. Dort einströmendes Medium kann nicht jenseits der beiden Dichtabschnitte 75 und 77 gelangen. Zwischen diesen beiden Dichtabschnitten mündet ein zweiter Abschnitt 79 der Kühl-/Schmiermittelzufuhr 69. Rein beispielhaft verlaufen der Kühl-/Schmiermittel-Kanal 69 und der zweite Abschnitt 79 im Wesentlichen parallel zur Mittelachse 9, während der erste Abschnitt 73 im Wesentlichen senkrecht dazu angeordnet ist. Wesentlich ist aber nur, dass der Kühl-/Schmiermittel-Kanal 69 über den ersten Abschnitt 73 mit dem zweiten Abschnitt 79 in Fluidverbindung steht, und dass der zweite Abschnitt 79 sich im Bereich der Stirnseite 15 der Werkzeugaufnahme 1 öffnet. Da der zweite Abschnitt 79 unter einem Winkel zur Schnittebene von Figur 3 verläuft, ist hier die Mündung des zweiten Abschnitts 79 im Bereich der Stirnseite 15 der Werkzeugaufnahme 1 nicht sichtbar.

Bei der Darstellung gemäß Figur 3 ist die Spanneinrichtung 5, wie in Figur 1, in ihrer Spannstellung wiedergegeben.

Der Einbauflansch 59 ist auf geeignete Weise am Grundkörper der Werkzeugaufnahme 1 befestigt, beispielsweise durch eine oder mehrere hier angedeutete Schrauben 81.

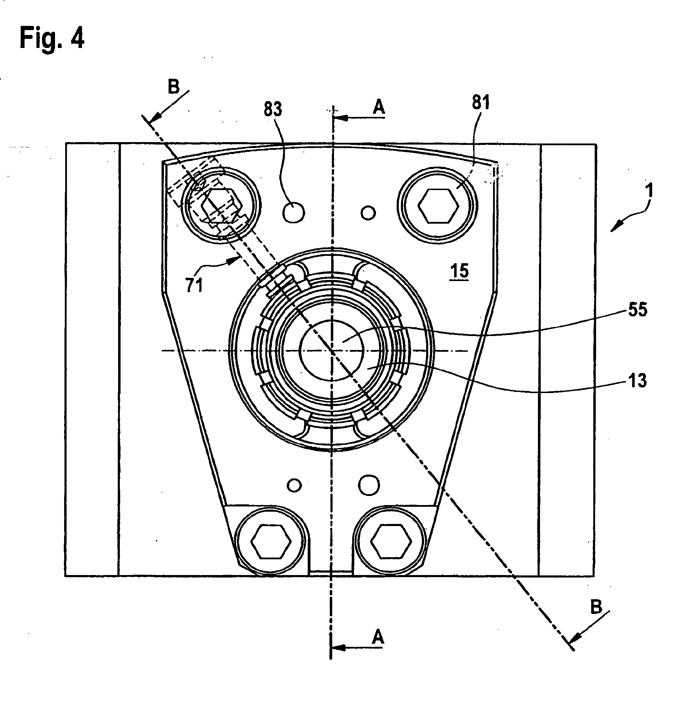

Figur 4 zeigt das in den Figuren 1 bis 3 dargestellte Ausführungsbeispiel der Werkzeugaufnahme 1 in Stirnansicht, also eine Draufsicht auf die Stirnseite 15. Gleiche Teile sind auch hier mit gleichen Bezugsziffern versehen, sodass insofern auf die vorangegangene Beschreibung Verwiesen wird.

Figur 4 zeigt mit einer Linie A-A die Schnittebene der Längsschnittdarstellungen gemäß den Figuren 1 und 2 und mit einer Linie B-B die Schnittebene der Längsschnittdarstellung in Figur 3. Es zeigt sich, dass die Kühl-/Schmiermittel-Stelleinrichtung 71 unter einem Winkel zu einer gedachten Vertikalen angeordnet ist. Der Winkel gegenüber dieser Vertikalen ist für die Funktion der hier beschriebenen Werkzeugaufnahme 1 von untergeordneter Bedeutung, er kann also frei gewählt werden. Entscheidend ist, dass der zweite Abschnitt 79 der Kühl-/Schmiermittelzufuhr 67 in der Stirnseite 15 mündet, sodass also der Innenraum 55 der Zugstange 13 nicht für die Realisierung der Kühl-/Schmiermittelzufuhr genutzt werden muss. Er steht vielmehr gemeinsam mit dem Hohlraum 57 in der Werkzeugaufnahme 1 für die Durchführung eines hier als Antriebswelle ausgebildeten Betätigungselements zur Verfügung, mit der ein drehbares Werkzeugelement in dem von der Werkzeugaufnahme 1 festgehaltenen Werkzeug in Rotation versetzbar ist. Über die Mündung 83 des zweiten Abschnitts 79 der Kühl-/Schmiermittelzufuhr 67 kann ein Kühl-/Schmiermittel auf die Stelle eines Werkstücks geleitet werden, die mittels eines von der Werkzeugaufnahme 1 gehaltenen Werkzeugs bearbeitet wird. Zum besseren Verständnis ist der zweite Abschnitt 79 in Figur 3 wiedergegeben, obwohl er nicht, beziehungsweise nicht in gesamter Länge, in der Schnittebene B-B zu liegen braucht. Die Mündung 83 in der Stirnseite 15 kann so angeordnet werden, dass der Einbauflansch 59 hier mit vier Schrauben 81 an der Werkzeugaufnahme 1 angebracht werden kann.

Bei der hier darstellten Ausführungsform der Werkzeugaufnahme handelt es sich beispielhaft um einen Teil eines Sternrevolvers, an dessen Umfangsfläche eine Anzahl von Werkzeugaufnahmen angeordnet ist, wie sie hier beschrieben wurde.

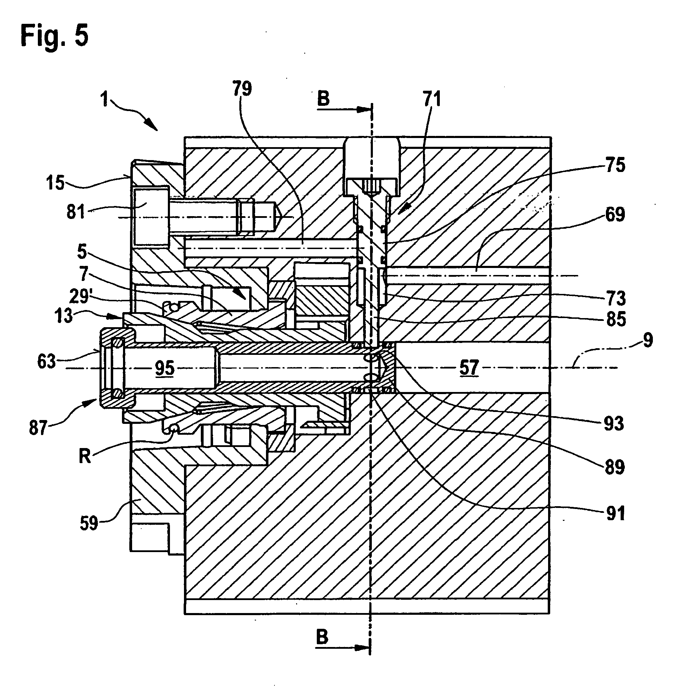

Figur 5 zeigt ein abgewandeltes Ausführungsbeispiel einer Werkzeugaufnahme 1. Gleiche und funktionsgleiche Teile, wie sie auch bei dem ersten Ausführungsbeispiel gemäß den Figuren 1 bis 4 vorliegen, werden hier mit gleichen Bezugsziffern versehen. Im Übrigen wird auf die vorangegangene Beschreibung verwiesen, um Wiederholungen zu vermeiden.

Die in Figur 5 dargestellte Werkzeugaufnahme 1 weist wiederum eine Spanneinrichtung 5 mit mindestens einer Spannzange 7, vorzugsweise mit mehreren in gleichen Umfangsabständen zueinander angeordneten Spannzangen 7 auf. Eine Zugstange 13 ist koaxial zur Mittelachse 9 der Werkzeugaufnahme 1 angeordnet und in Richtung dieser Mittelachse mittels einer Betätigungseinrichtung 27 verlagerbar. Die Zugstange 13 bewegt sich in Figur 5 nach rechts, wenn ein Betätigungselement 31 der Betätigungseinrichtung 27 unter einem Winkel, hier von 90°, in Richtung auf die Mittelachse 9 bewegt wird. Ein erster Außenflächenabschnitt 17 auf der Umfangsfläche der Zugstange 13 bewirkt dabei, dass die mindestens eine Spannzange 7 nach außen verschwenkt wird und in einen in die Werkzeugaufnahme 1 eingesteckten Hohlschaftkegel eines Werkzeugs eingreift, das hier nicht dargestellt ist. Die zumindest eine Spannzange 7 übt eine Kraft von innen auf den Hohlschaftkegel aus, sodass dieser einerseits gegen die Aufnahmefläche 11 angepresst und andererseits in das Innere der Werkzeugaufnahme 1 hineingezogen und damit sicher verankert wird.

Die Axialverlagerung der Zugstange 13 wird durch einen Stift 47 geführt, der auch eine radiale Abstützung der Zugstange 13 bewirkt. Der Stift 47 ist beispielsweise als hohles Federelement ausgebildet, das mit einem Längsschlitz versehen ist, um auf einfache Weise in einem Vorsprung 43 der Zugstange 13 verankert werden zu können, der am inneren Ende 29 der Zugstange 13 entspringt. Insofern wird auf die Erläuterungen zu den vorangegangen Figuren verwiesen.

Wie auch bei dem Ausführungsbeispiel nach den Figuren 1 bis 4 ist hier eine Kühl-/Schmiermittelzufuhr 67 vorgesehen, die einen Kühl-/Schmiermittel-Kanal 69, einen ersten Abschnitt 73 der Kühl-/Schmiermittelversorgung und einen zweiten Abschnitt 79 umfasst. Auch hier ist wieder eine Kühl-/Schmiermittel-Stelleinrichtung 71 vorgesehen, die von außen in den ersten Abschnitt 73 einführbar ist. Vorzugsweise wird hier eine Schraube als Stelleinrichtung verwendet. Die Kühl-/Schmiermittel-Stelleinrichtung 71 weist einen ersten Dichtabschnitt 75 auf, der den ersten Abschnitt 73 der Kühl-/Schmiermittel-Versorgung nach außen abdichtet, hier aber auch den zweiten Abschnitt 79, sodass in den Kühl-/Schmiermittel-Kanal 69 eingeleitetes Kühl-/Schmiermittel nicht in diesen zweiten Abschnitt 79 gelangen kann.

Die Kühl-/Schmiermittel-Stelleinrichtung 71 ist gegenüber dem Ausführungsbeispiel der Figuren 1 bis 4 abgewandelt. Sie weist lediglich den ersten Dichtabschnitt 75 auf. Sie erstreckt sich im Inneren des ersten Abschnitts 73 der Kühl-/Schmiermittelzufuhr und umfasst einen Ansatz 85, dessen Außendurchmesser kleiner ist als der des ersten Abschnitts 75. Der Ansatz 85 ragt in Richtung der Mittelachse 9 in den Hohlraum 57 in der Werkzeugaufnahme 1. Dort ist bei dem hier dargestellten Ausführungsbeispiel ein Kühl-/Schmiermittel-Rohr 87 vorgesehen, das konzentrisch zur Mittelachse 9 verläuft und sich durch die hohle Zugstange 13 erstreckt. Der Hohlraum 57 reicht hier also nicht bis zur Stirnseite 15 der Werkzeugaufnahme 1. Die hier dargestellte Werkzeugaufnahme 1 kann also nicht über eine Antriebswelle in Rotation versetzt werden. Daher ist die Werkzeugaufnahme 1 für feststehende Werkzeuge geeignet, die über einen Hohlschaftkegel von der Spanneinrichtung 5 mit der Werkzeugaufnahme 1 fest verbunden werden.

Das Kühl-/Schmiermittel-Rohr 87 ist an seinem innenliegenden Ende stirnseitig verschlossen. Es weist eine in seine Umfangsfläche eingebrachte Ringnut 91 auf, in die der Ansatz 85 der Kühl-/Schmiermittelstelleinrichtung 71 eingreift und damit das Kühl-/Schmiermittel-Rohr 87 in axialer Richtung fixiert. Die Kühl-/Schmiermittel-Stelleinrichtung 71 ist hier also als Fixierschraube für das Kühl-/Schmiermittel-Rohr 87 ausgebildet. Der erste Abschnitt 73 steht in Fluidverbindung mit der Ringnut 91, das heißt, dass ein in den Kühl-/Schmiermittel-Kanal 69 eingeleitetes Medium zur Kühlung und/oder Schmierung des Werkzeugs über den ersten Abschnitt 73 bis zur Ringnut 91 gelangt. Diese ist über mindestens eine Bohrung 93, vorzugsweise über eine Anzahl von Bohrungen 93 mit dem Inneren 95 des Kühl-/Schmiermittel-Rohrs 87 verbunden. Ein von der Kühl-/Schmiermittel-Zufuhr 67 bereitgestelltes Medium kann also durch das Kühl-/Schmiermittel-Rohr 87 zu einem Werkzeug geführt werden, das von der Werkzeugaufnahme 1 gehalten wird. Vorzugsweise weist das Werkzeug einen Kühl-/Schmiermittelansatz auf, der in das linke Ende des Kühl-/Schmiermittel-Rohrs 87 dichtend eingeführt wird. Durch den Innenraum des Kühl-/Schmiermittel-Rohrs 87 wird also ein Kanalabschnitt der Kühl-/Schmiermittelversorgung realisiert.

Insgesamt zeigt sich hier, dass der Grundaufbau der beiden Werkzeugaufnahmen gemäß den Figuren 1 bis 4 und 5 gleich ist, dass aber durch die besondere Ausgestaltung der Kühl-/Schmiermittel-Stelleinrichtung 71 ein bereitgestelltes Medium nicht über den zweiten Abschnitt 79 der Kühl-/Schmiermittelversorgung an die Stirnseite 15 der Werkzeugaufnahme 1 abgegeben wird, sondern nach innen in das Innere 95 eines in die hohle Zugstange 13 eingeführten Kühl-/Schmiermittel-Rohrs 87, sodass hier eine zentrale Kühl-/Schmiermittelversorgung realisiert wird.

Zum Lösen der Spanneinrichtung 5 wird, wie anhand von Figur 2 erläutert, die Betätigungseinrichtung 27 aktiviert, sodass das Betätigungselement 31 von einer Gewindespindel 35 unter einem Winkel von vorzugsweise 90° zur Mittelachse 9 nach außen, also von der Mittelachse 9 weg verlagert wird. Auch hier wird zwischen der Betätigungseinrichtung 27 und der Zugstange 13 ein Keilgetriebe realisiert, sodass die Auswärtsbewegung des Betätigungselements 31 eine Axialverlagerung der Zugstange 13 nach links bewirkt, sodass die mindestens eine Spannzange 7 in Richtung auf die Mittelachse 9 zurückverschwenken kann, gegebenenfalls unter Einwirkung eines Rückholelements R. Die Zugstange 13 kann auch hier so weit nach links verlagert werden, dass ihre Stirnfläche 63 ein in die Werkzeugaufnahme 1 eingesetztes Werkzeug ausstößt.

Bei einer Betätigung der Spanneinrichtung 5, also bei einer Bewegung der Zugstange 13, wird durch den Ansatz 85, der in die Ringnut 91 des Kühl-/Schmiermittel-Rohrs 87 eingreift, eine axiale Verschiebung dieses Rohrs im Hohlraum 57 der Werkzeugaufnahme 1 verhindert. Damit bleibt eine mit den Kühl-/Schmiermittelkanal 69 und den ersten Abschnitt 73 verlaufende Kühl-/Schmiermittelzufuhr stets gewährleistet.

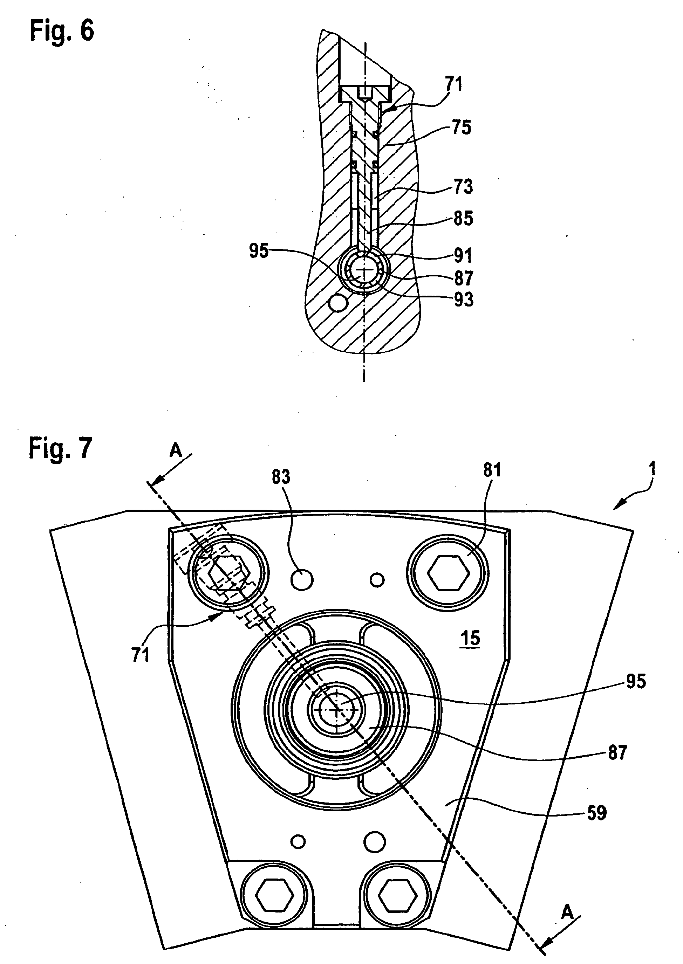

Figur 6 zeigt einen Längsschnitt durch die Kühl-/Schmiermittelstelleinrichtung 71, wobei die Schnittebene gegenüber der Darstellung in Figur 5 um 90° gedreht ist und entlang der Linie B-B in Figur 5 verläuft. Gleiche Teile sind mit gleichen Bezugsziffern versehen, sodass auf die vorangegangene Beschreibung verwiesen wird.

Die Kühl-/Schmiermittel-Stelleinrichtung 71 kann ein Steckelement umfassen. Vorzugsweise wird jedoch eine Schraube verwendet, die in die Werkzeugaufnahme 1 eingeschraubt wird. Sie umfasst einen ersten Dichtabschnitt 75, der den ersten Abschnitt 73 der Kühl-/Schmiermittelzufuhr nach außen dichtet. Durch neben dem Ansatz 85 vorgesehene Nuten oder Bohrungen, die zwischen dem ersten Abschnitt 73 und der Ringnut 91 verlaufen, wird eine Fluidverbindung geschaffen, sodass ein Kühl-/Schmiermittelmedium über die mindestens eine Bohrung 93 in das Innere 95 des Kühl-/Schmiermittel-Rohrs 87 gelangen kann und einem von der Werkzeugaufnahme 1 gehaltenen Werkzeug zur Verfügung gestellt wird.

Figur 7 zeigt eine Draufsicht auf die Werkzeugaufnahme 1, wie sie in Figur 5 dargestellt ist. Hier wird deutlich, dass die Kühl-/Schmiermittel-Stelleinrichtung 71 wiederum unter einem Winkel zu einer gedachten Vertikalen angeordnet ist. Sie ist aber so ausgebildet, dass Kühl-/Schmiermittel nicht bis zur Stirnseite 15 der Werkzeugaufnahme 1 gelangen kann. Die Mündung 83 ist also bei Verwendung dieser Kühl-/Schmiermittel-Stelleinrichtung 71 so abgedichtet, dass hier kein Kühl-/Schmiermittel austreten kann und das gesamte Medium der zentralen Kühl-/Schmiermittelzufuhr über das Innere 95 des Kühl-/Schmiermittel-Rohrs 87 zur Verfügung gestellt wird.

Bei der Darstellung gemäß Figur 7 wird deutlich, dass der Einbauflansch 59 mithilfe von mindestens einer Schraube 81, hier mit vier Schrauben, am Grundkörper der Werkzeugaufnahme 1 fixiert wird. Diese ist als Trommelrevolver ausgebildet, an dessen Stirnseite eine Anzahl von Werkzeugaufnahmen 1 vorgesehen ist, wie sie anhand der Figuren 5 und 6 erläutert wurde.

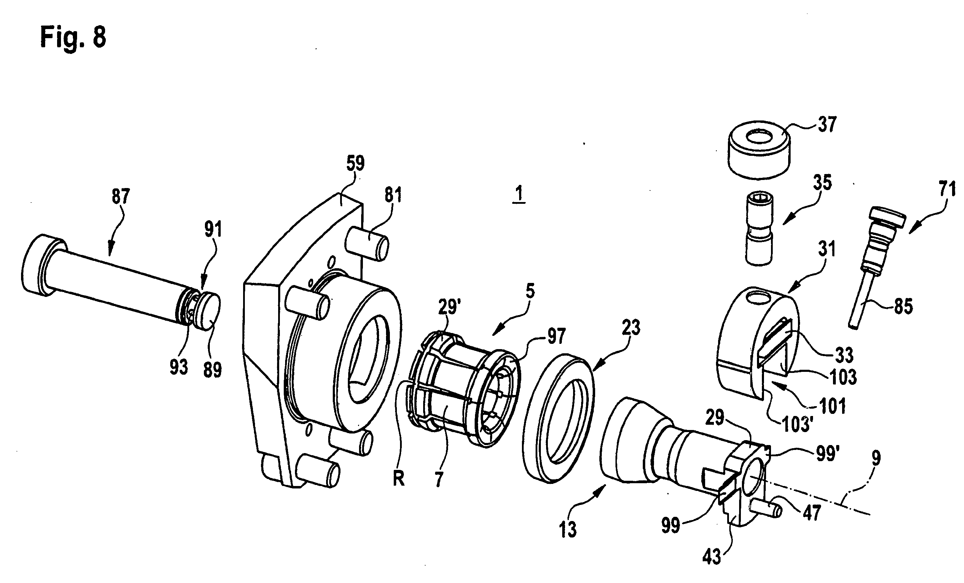

Figur 8 zeigt Teile einer Werkzeugaufnahme 1, wie sie in den Figuren 5 bis 7 erläutert wurde. Gleiche und funktionsgleiche Teile sind mit gleichen Bezugsziffern versehen, sodass auf die vorangegangene Beschreibung verwiesen wird.

Es ist hier also das Ausführungsbeispiel der Werkzeugaufnahme 1 beschrieben, das ein Kühl-/Schmiermittel-Rohr 87 aufweist, welches in die hohle Zugstange 13 einführbar ist. Deutlich erkennbar ist am innenliegenden Ende 89 des Kühl-/Schmiermittel-Rohrs 87 der stimseitige Verschluss zu erkennen, außerdem ist hier die Ringnut 91 wiedergegeben, deren Grund mindestens eine, vorzugsweise mehrere Bohrungen 93 aufweist, die das Innere 95 des Kühl-/Schmiermittel-Rohrs 87 mit der Ringnut 91 verbinden. In diese Ringnut greift im zusammengesetzten Zustand der Werkzeugaufnahme 1 der Ansatz 85, der als Fixierschraube dienenden Kühl-/Schmiermittel-Stelleinrichtung 71, die oben erläutert wurde.

In einem Abstand zum Einbauflansch 59, der von mindestens einer Schraube 81 durchdrungen wird, findet sich, die Spanneinrichtung 5, die hier mehrere in einem Abstand zueinander angeordnete Spannzangen 7 aufweist. Am rechten Ende der Spanneinrichtung 5 sind die Spannzangen 7 über ein Halteelement 97 miteinander verbunden, was die Montage der Spanneinrichtung 5 deutlich erleichtert. Das Halteelement 97 wird von der Distanzscheibe 23 aufgenommen und gegen den Einbauflansch 59 angepresst. So ist es auf einfache Weise möglich, die Spannzangen 7 mit einer bevorzugten Richtung von dem Ring 97 entspringen zu lassen, sodass sie sich beispielsweise gegen die Außenfläche der Zugstange 13 unter einer Vorspannung anlegen. Denkbar ist es aber auch, wie oben beschrieben, im Bereich des Kopfes 29' der Spannzangen 7 als elastisches Rückholelement R einen O-Ring vorzusehen, der die Köpfe 29' der Spannzangen gegen die Zugstange 13 anlegt.

Bei der perspektivischen Widergabe der Werkzeugaufnahme 1 ist der Vorsprung 43 der Zugstange 13 gut erkennbar, außerdem der Stift 47, welcher der Führung der Zugstange 13 sowohl in axialer als auch in radialer Richtung dient.

Auf der Außenseite der Zugstange 13 ist hier das mindestens eine Eingriffsteil 99 der Zugstange 13 zu erkennen, das mit dem Betätigungsteil 33 des Betätigungselements 31 zusammenwirkt.

Bei dem hier dargestellten Ausführungsbeispiel weist die Zugstange 13 zwei gegenüberliegende Eingriffsteile 99 auf, sodass die in axialer Richtung wirkenden Kräfte gleichmäßig auf die Zugstange 13 einwirken, sodass diese nicht verkippt.

Das Betätigungselement 31 weist einen Aufnahmeschlitz 101 mit mindestens einer Innenfläche 103 auf, an der das Betätigungsteil 33 angeordnet ist. Das Betätigungselement 31 weist hier einen von zwei im Wesentlichen parallel verlaufenden Innenflächen 103 begrenzten Aufnahmeschlitz 101 auf, in welchen das Ende 29 der Zugstange 13 zu liegen kommt.

Grundsätzlich ist es möglich, einen seitlich offenen Aufnahmeschlitz 101 im Betätigungselement 31 vorzusehen, an dessen einer Innenfläche 103 ein Betätigungsteil 33 vorgesehen ist. Die Zugstange 13 kann sich auf geeignete Weise an dem Stift 47 oder an einer Innenfläche in der Werkzeugaufnahme 1 abstützen. Vorzugsweise sind aber zwei Innenflächen 103 vorgesehen, um zwei gegenüberliegende Betätigungsteile 33 vorsehen zu können, die auf beiden Seiten an der Zugstange 13 eingreifen und somit gleichmäßig Kräfte in diese einleiten. Die Betätigungsteile 33 und die Eingriffsteile 99 bilden ein Keilgetriebe aus, unabhängig davon, welches der beiden Teile als Vorsprung und welches als Nut ausgebildet ist.

Bei dem hier dargestellten Ausführungsbeispiel sind auf den Innenflächen 103 des Aufnahmeschlitzes 101 des Betätigungselements 31 Nuten vorgesehen, die mit als Vorsprünge ausgebildete Eingriffsteile 99 an der Zugstange 13 zusammenwirken.

Wie oben beschrieben, verlaufen die Betätigungsteile 33 und Eingriffsteile 99 unter einem Winkel zu einer gedachten Mittelachse 9 der Werkzeugaufnahme 1. Vorzugsweise wird ein Winkel von circa 40° zu einer gedachten senkrecht zur Mittelachse 9 verlaufenden Linie gewählt, um ein ausgewogenes Verhältnis zwischen Verlagerungsweg der dem Keilgetriebe zugeordneten Teile und der von der Zugstange 13 beziehungsweise der mindestens einen Spannzange 7 ausgeübten Kraft zu realisieren. Dabei ist es wesentlich, dass über die Zugstange 13 und über die mindestens eine Spannzange 7 so große Kräfte in den Hohlschaft eines Werkzeugs eingeleitet werden, dass eine sichere Verspannung in der Werkzeugaufnahme 1 gewährleistet ist.

Figur 8 zeigt noch die Gewindespindel 35 mit zwei Gewindeabschnitten, von denen ein erster in das Betätigungselement 31 und ein zweiter in ein hier als Gewindering ausgebildetes Gewindeelement 37 eingreift. Vorzugsweise sind die Gewindeabschnitte der Gewindespindel 35 mit entgegengesetzten Steigungen versehen, sodass eine Drehbewegung der Gewindespindel in eine Richtung eine relativ große Verlagerung des Betätigungselements 31 bewirkt.

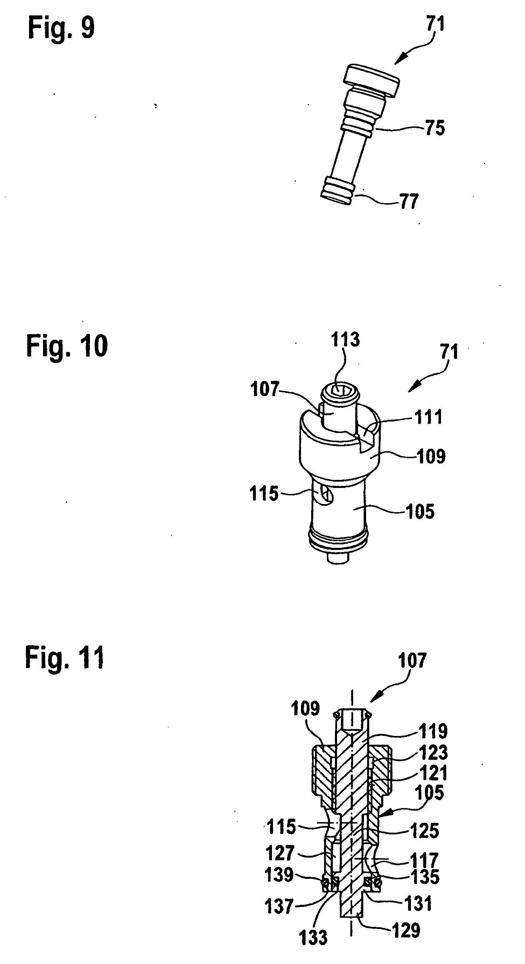

Figur 9 zeigt schließlich noch die Kühl-/Schmiermittel-Stelleinrichtung 71 des Ausführungsbeispiels der Werkzeugaufnahme 1, welches in Figur 3 wiedergegeben ist. Dieses Ausführungsbeispiel der Kühl/Schmiermittelstelleinrichtung 71 dient dazu, zwei im Wesentlichen parallel zur Mittelachse 9 verlaufende Kanäle der Kühl/Schmiermittel-Versorgung miteinander zu verbinden und das Medium aus der Stirnseite 15 der Werkzeugaufnahme 1 austreten zu lassen.

Aus den Erläuterungen wird deutlich, dass bei Werkzeugaufnahmen 1, die als Trommelrevolver oder als Sternrevolver ausgebildet sind, verschiedene Kühl-/Schmiermittel-Führungen möglich sind. Bei beiden Ausführungsbeispielen kann ein zentraler Austritt des Kühl-/Schmiermittelmediums in den Aufnahmebereich eines Werkzeugs sichergestellt werden, aber auch ein Austritt aus der Stirnseite 15 der Werkzeugaufnahme 1.

Bei dem Ausführungsbeispiel gemäß Figur 3 ist vorgesehen, dass die Kühl-/Schmiermittel-Stelleinrichtung 71 derart ausgebildet ist, dass durch sie eine Fluidverbindung zwischen dem ersten Abschnitt 73 der Kühl-/Schmiermittelzufuhr 67 und dem Hohlraum 57 verschließbar ist, während eine Fluidverbindung zwischen dem ersten Abschnitt 73 und dem zweiten Abschnitt 79 der Kühl-/Schmiermittelzufuhr 67 freigebbar ist. Wird also eine Kühl-/Schmiermittel-Stelleinrichtung 71 gemäß dem Ausführungsbeispiel von Figur 3 eingesetzt, bewirkt die Anordnung des ersten Dichtabschnitts 75 und diejenige des zweiten Dichtabschnitts 77, dass Kühl-/Schmiermittel aus dem Kühl-/Schmiermittel-Kanal 69 über den ersten Abschnitt 73 in den zweiten Abschnitt 79 strömen kann. Gleichzeitig dichtet der zweite Dichtabschnitt 77 die Kühl-/Schmiermittel-Versorgung 67 gegenüber dem Hohlraum 57 ab. So wird ausschließlich eine dezentrale Versorgung mit Kühl-/Schmiermittel bereitgestellt, wobei dieses an einer Mündung 83 in der Stirnseite 15 der Werkzeugaufnahme 1 zur Verfügung steht.

Das Ausführungsbeispiel gemäß Figur 5 zeigt eine Kühl-/Schmiermittel-Stelleinrichtung 71, die so ausgebildet ist, dass durch sie eine Fluidverbindung zwischen dem ersten Abschnitt 73 der Kühl-/Schmiermittel-Versorgung 67 und dem Kühl-/Schmiermittel-Rohr 87 freigebbar ist, während eine Fluidverbindung zwischen dem ersten Abschnitt 73 und dem zweiten Abschnitt 79 der Kühl-/Schmiermittel-Versorgung 67 verschließbar ist. Bei diesem Ausführungsbeispiel wird also eine Verbindung zwischen dem Kühl-/Schmiermittel-Kanal 69 und dem zweiten Abschnitt 79 der Kühl-/Schmiermittelversorgung 67 durch den ersten Dichtabschnitt 75 gesperrt, während kein zweiter Dichtabschnitt 77 vorgesehen ist, so dass das Kühl-/Schmiermittel von dem Kühl-/Schmiermittel-Kanal 69 über den ersten Abschnitt 73 zu dem Kühl-/Schmiermittel-Rohr 87 gefangen kann. So wird ausschließlich eine zentrale Kühl-Schmiermittel-Versorgung realisiert, wobei das Kühl-/Schmiermittel einem Werkzeug zentral über das Kühl-/Schmiermittel-Rohr 87 zur Verfügung gestellt wird. Dementsprechend kann kein Kühl-/Schmiermittel zu der Mündung 83 in der Stirnseite 15 der Werkzeugaufnahme 1 gelangen.

Aus dem gesagten wird deutlich, dass bei den in den Figuren 3 und 5 gezeigten Ausführungsbeispielen jeweils eine Kühl-/Schmiermittel-Stelleinrichtung 71 vorgesehen ist, die genau eine der beiden möglichen Versorgungswege, nämlich den zentralen oder den dezentralen Versorgungsweg, freigibt, während der andere gesperrt wird.

Figur 10 zeigt eine Kühl-/Schmiermittel-Stelleinrichtung 71, die im Wesentlichen zwei Funktionsstellungen aufweist beziehungsweise einnehmen kann. Hierzu weist sie ein äußeres Verteilerelement 105 und ein in diesem entlang dessen Längsachse verlagerbar angeordnetes Stellglied 107 auf. In Figur 10 ist die Kühl-/Schmiermittel-Stelleinrichtung 71 in ihrer ersten Funktionsstellung dargestellt, in der das innere Stellglied 107 relativ zu dem Verteilerelement 105 in eine obere Position verlagert ist, in der das obere Ende des Stellglieds 107 aus dem Verteilerelement 105 hinausragt.

Das Verteilerelement 105 umfasst bevorzugt einen Bereich größten Durchmessers, der als Kopf 109 ausgebildet ist. Dieser dient vorzugsweise der Fixierung des Verteilerelements 105 in der Werkzeugaufnahme 1. Hierzu weist er vorzugsweise an seiner Umfangsfläche ein Außengewinde auf, das mit einem entsprechenden Innengewinde in der Werkzeugaufnahme 1 kämmt. Es ist eine Betätigungseinrichtung 111 vorgesehen, mittels derer das Verteilerelement 105 in der Werkzeugaufnahme 1 fixiert werden kann. Diese ist hier vorzugsweise als Schlitz ausgebildet, der sich im Wesentlichen senkrecht zur Längsachse der Stelleinrichtung 71 erstreckt. In an sich bekannter Weise kann hier ein Schraubendreher eingreifen, um den Kopf 109 mit Hilfe des Außengewindes in einem entsprechenden Innengewinde der Werkzeugaufnahme 1 zu fixieren.

Das Stellglied 107 weist ebenfalls eine Betätigungseinrichtung 113 auf, mittels derer es innerhalb des Betätigungselements 105 verlagerbar ist. Diese ist hier als Ausnehmung mit hexagonaler Umfangsfläche ausgebildet, in die in bekannter Weise ein Schlüssel mit hexagonaler Außenfläche, beispielsweise ein Inbusschlüssel, eingreifen kann.

Das Verteilerelement 105 weist mindestens zwei vorzugsweise radiale, das heißt im Wesentlichen senkrecht zur Längsrichtung angeordnete Bohrungen auf, von denen hier eine obere Bohrung 115 sichtbar ist. Diese Bohrungen dienen der Verteilung des Kühl-/Schmiermittel-Stroms.

Figur 11 zeigt einen Längsschnitt durch die Kühl-/Schmiermittel-Stelleinrichtung aus Figur 10. Gleiche und funktionsgleiche Elemente sind mit gleichen Bezugszeichen versehen, so dass insofern auf die vorangegangene Beschreibung verwiesen wird. Auch in Figur 11 ist die Stelleinrichtung 71 in ihrer ersten Funktionsstellung dargestellt. Erkennbar ist hier neben der oberen Bohrung 115 auch eine untere Bohrung 117, die ebenfalls im Wesentlichen senkrecht zur Längserstreckung der Stelleinrichtung 71 angeordnet ist.

Das Stellglied 107 umfasst einen oberen Bereich 119, dessen Umfangsfläche zumindest bereichsweise ein Außengewinde aufweist. Vorzugsweise erstreckt sich das Außengewinde über die gesamte Umfangsfläche des oberen Bereichs 119. Es kämmt mit einem Innengewinde, das an einer inneren Umfangsfläche 121 des Verteilerelements 105 zumindest bereichsweise angeordnet ist. Im oberen Bereich des Kopfs 109 ist ein als Ringnut ausgebildeter Freistich 123 angeordnet, von dem aus sich das Innengewinde an der Umfangsfläche 121 - in axialer Richtung gesehen - nach unten fortsetzt. Vorzugsweise setzt sich dieses bis in den Bereich der unteren Bohrung 117 fort.

Das Stellglied 107 weist einen unteren Bereich 125 auf, dessen Außendurchmesser kleiner ist als der Innendurchmesser des Verteilerelements 105. Durch die äußere Umfangsfläche des unteren Teils 125 des Stellglieds 107 einerseits und die innere Umfangsfläche des Verteilerelements 105 andererseits wird daher ein Ringraum 127 definiert, in dem Kühl-/Schmiermittel strömen kann.

Der untere Bereich 125 weist von seinem unteren Ende 129 - in axialer Richtung gesehen - beabstandet einen radialen Vorsprung 131 auf, der vorzugsweise näher an dem unteren Ende 129 als an dem oberen Bereich 119 angeordnet ist. Der radiale Vorsprung 131 weist einen Außendurchmesser auf, der im Wesentlichen dem Innendurchmesser des Verteilerelements 105 entspricht.

Der Vorsprung 131 umfasst entlang seines Umfangs ein Dichtelement 135. In dem dargestellten Ausführungsbeispiel ist in dem Vorsprung 131 eine Ringnut 133 angeordnet, die das hier separat ausgebildete Dichtelement 135, vorzugsweise einen O-Ring, aufnehmen kann. Das Dichtelement 135 kann in einem anderen, nicht dargestellten Ausführungsbeispiel auch einstückig mit dem Vorsprung 131 ausgebildet sein, vorzugsweise als elastischer Bereich.

In der in Figur 11 dargestellten ersten Funktionsstellung der Kühl-/Schmiermittel-Stelleinrichtung 71 ist das Stellglied 107 so weit nach oben verlagert, dass der Vorsprung 131 im Wesentlichen vollständig in dem Verteilerelement 105 angeordnet ist. Hierbei liegt das Dichtelement 135 an einer inneren Umfangsfläche des Verteilerelements 105 an und wird durch diese komprimiert, so dass der Ringraum 127 nach unten abgedichtet ist.

In der dargestellten Funktionsstellung ist - in axialer Richtung gesehen - etwa in der gleichen Höhe des Dichtelements 135 am unteren Ende des Verteilerelements 105 ein weiteres Dichtelement 139 vorgesehen. In dem dargestellten Ausführungsbeispiel umfasst die äußere Umfangsfläche des Verteilerelements 105 eine Ringnut 137, in der das hier separat ausgebildete Dichtelement 139, vorzugsweise ein O-Ring, angeordnet werden kann. Dieses dient zur dichtenden Anlage an einer inneren Umfangsfläche der Werkzeugaufnahme 1, was im Folgenden noch deutlich werden wird.

In Figur 11 ist bereits das Folgende erkennbar: Der Ringraum 127 wird nach unten durch das Dichtelement 135 abgedichtet, wobei nach oben das - vorzugsweise als Feingewinde ausgebildete - Außengewinde des oberen Bereichs 119, das mit dem an der inneren Umfangsfläche 121 angeordneten Gewinde kämmt, eine abdichtende Funktion übernimmt. Der Ringraum 127 ist also nach oben und unten abgeschlossen. Zusätzlich ist es in einem bevorzugten Ausführungsbeispiel möglich, in den Freistich 123 ein nicht dargestelltes Dichtelement, beispielsweise einen O-Ring, einzulegen, so dass hier eine zusätzliche Abdichtung vorgesehen ist.

Insgesamt zeigt sich, dass in der dargestellten ersten Funktionsstellung der Kühl-/Schmiermittel-Stelleinrichtung 71 der Ringraum 127 ausschließlich durch die Bohrungen 115, 117 zugänglich ist.

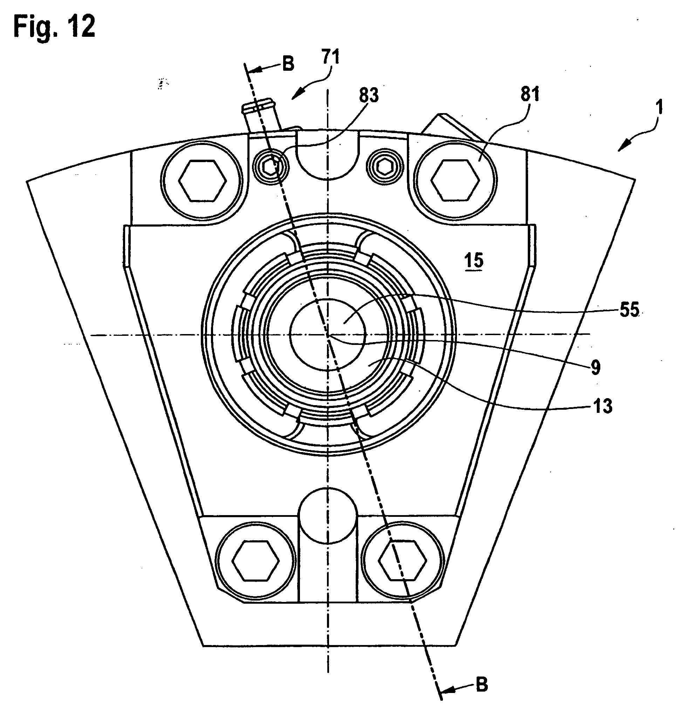

Figur 12 zeigt eine Stirnansicht eines Ausführungsbeispiels der Werkzeugaufnahme 1, bei dem die Kühl-/Schmiermittel-Stelleinrichtung 71 aus Figur 10 in ihrer ersten Funktionsstellung angeordnet ist. Gleiche und funktionsgleiche Elemente sind mit gleichen Bezugszeichen versehen, so dass insofern auf die vorangegangene Beschreibung verwiesen wird. In Abweichung zu den in den Figuren 4 und 7 dargestellten Ausführungsbeispielen ist die Kühl-/Schmiermittel-Stelleinrichtung 71 hier im Wesentlichen fluchtend zu der Mündung 83 angeordnet. Dies ist allerdings für die Funktionsweise derselben ohne Belang.

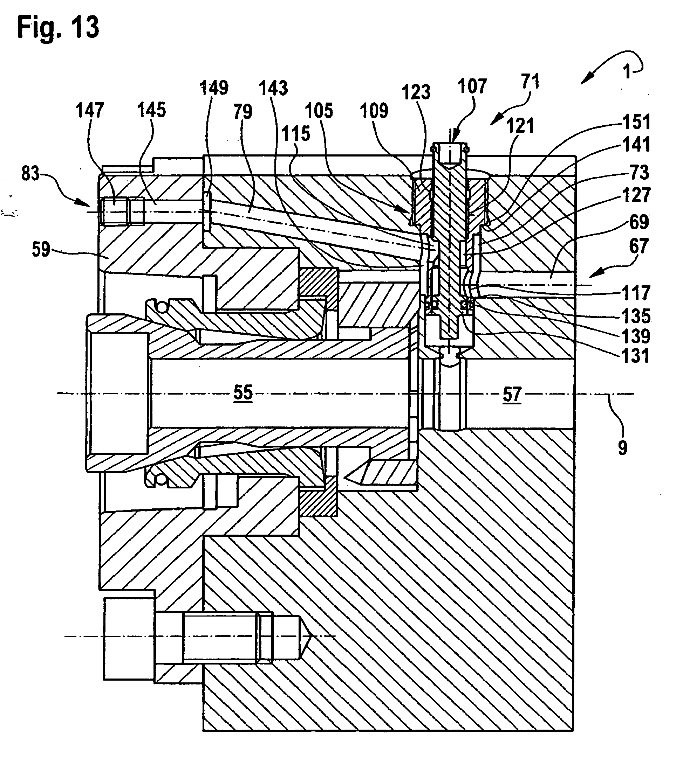

Figur 13 zeigt eine Schnittdarstellung der Werkzeugaufnahme 1 aus Figur 1 entlang der Linie B-B. Gleiche und funktionsgleiche Elemente sind mit gleichen Bezugszeichen versehen, so dass insofern auf die vorangegangene Beschreibung verwiesen wird.

In Figur 13 ist die Kühl-/Schmiermittel-Stelleinrichtung 71 in ihrer ersten Funktionsstellung in der Werkzeugaugnahme 1 angeordnet. In einem nicht dargestellten Ausführungsbeispiel kann sie als Steckeinrichtung ausgebildet sein, die fest und sicher in eine Ausnehmung der Werkzeugaufnahme 1 einsteckbar ist. Bei dem dargestellten Ausführungsbeispiel weist allerdings der Kopf 109 an seiner Umfangsfläche ein Außengewinde auf, das mit einem entsprechenden Innengewinde in der Werkzeugaufnahme 1 kämmt. So ist es möglich, die Kühl-/Schmiermittel-Stelleinrichtung 71 fest und sicher in der Werkzeugaufnahme 1 zu verankern, indem sie - beispielsweise mit Hilfe der hier nicht dargestellten Betätigungseinrichtung 111 - in die Werkzeugaufnahme 1 eingeschraubt wird.

Die die Kühl-/Schmiermittel-Stelleinrichtung 71 aufnehmende Ausnehmung in der Werkzeugaufnahme 1 bildet zugleich den ersten Abschnitt 73, so dass die Kühl-/Schmiermittel-Stelleinrichtung 71 in diesem angeordnet werden kann. Die Ausnehmung weist eine Schulter 141 auf, an der der Kopf 109 anschlägt, so dass die Kühl-/Schmiermittel-Stelleinrichtung 71 - in ihrer axialen Richtung gesehen - fixiert ist.

Wie bereits gesagt, ist die Kühl-/Schmiermittel-Stelleinrichtung 71 hier in ihrer ersten Funktionsstellung dargestellt. Dies bedeutet, dass das Stellglied 107 relativ zu dem Verteilerelement 105 soweit nach oben verlagert ist, dass der Vorsprung 131 im Wesentlichen vollständig innerhalb des Verteilerelements 105 angeordnet ist. Damit ist der Ringraum 127 nach unten durch das Dichtelement 135 verschlossen, während er nach oben durch das an der inneren Umfangsfläche 121 vorgesehene Gewinde, das mit dem entsprechenden Außengewinde des Stellglieds 107 kämmt, abgeschlossen ist.

Bei einem bevorzugten, nicht dargestellten Ausführungsbeispiel kann zusätzlich in dem Freistich 123 ein Dichtelement, beispielsweise ein O-Ring, vorgesehen sein, welches für eine zusätzliche Abdichtung des Ringraums 127 nach oben sorgt.

Es zeigt sich das Folgende: In der ersten Funktionsstellung der Kühl-/Schmiermittel-Stelleinrichtung 71 kann Kühl-/Schmiermittel durch den Kühl-/Schmiermittel-Kanal 69 in den ersten Abschnitt 73 einströmen. Der Innendurchmesser des ersten Abschnitts 73 ist vorzugsweise größer als der Außendurchmesser des Verteilerelements 105, zumindest in dem Bereich, der - in axialer Richtung gesehenden Kühl-/Schmiermittel-Kanal 69 mit dem zweiten Abschnitt 79 verbindet. Auf diese Weise umfasst der erste Abschnitt 73 einen Ringraum 143, der die äußere Umfangsfläche des Verteilerelements 105 in dem angesprochenen Bereich umgibt.

Das Kühl-/Schmiermittel tritt von diesem Ringraum 143 durch die Bohrung 117 in die Kühl-/Schmiermittel-Stelleinrichtung 71 ein. Zu beachten ist hierbei, dass der Ringraum 143 ein sehr kleines Volumen und einen ebenfalls sehr kleinen Strömungsquerschnitt aufweist. Von dem Kühl-/Schmiermittel-Kanal 69 kommend strömt das Kühl-/Schmiermittel also im Wesentlichen durch die Bohrung 117, die einen deutlich größeren Strömungsquerschnitt aufweist, so dass sich nur ein geringer Anteil des Kühl-/Schmiermittel-Stroms auf den Ringraum 143 verteilt.

Durch die Bohrung 117 gelangt das Kühl-/Schmiermittel in den Ringraum 127, der, wie gesagt, nach unten durch das Dichtelement 135 und nach oben durch das beschriebene Gewinde abgedichtet ist. Daher tritt das Kühl-/Schmiermittel aus der Bohrung 115 wieder aus und gelangt - wiederum über den Ringraum 143 - in den zweiten Abschnitt 79 der Kühl-/Schmiermittel-Versorgung 67. An diesen schließt sich eine Bohrung 145 an, die den Einbauflansch 59 durchsetzt und die Mündung 83 aufweist. Bei einem bevorzugten Ausführungsbeispiel kann die Mündung 83 durch eine Wurmschraube 147 verschlossen werden, wenn keine Kühl-/Schmiermittel-Versorgung an dieser Stelle gewünscht ist. Die Wurmschraube 147 muss dann entfernt werden, um Kühl-/Schmiermittel aus der Mündung 83 zu entnehmen.

Zum Verschließen der Mündung 83 können bei anderen bevorzugten Ausführungsbeispielen auch andere Schraubenarten oder geeignete Stopfen Verwendung finden. Wesentlich ist lediglich, dass es möglich ist, die Mündung 83 sicher verschließen zu können, wenn aus ihr kein Kühl-/Schmiermittel austreten soll.

In der Werkzeugaufnahme 1 kann eine Nut 149 in der dem Einbauflansch 59 zugewandten Fläche vorgesehen sein. Über diese kann das Kühl-/Schmiermittel auf verschiedene Bohrungen 145 beziehungsweise verschiedene Mündungen 83 verteilt werden. Im Sinne einer Funktionsumkehr kann in einem anderen Ausführungsbeispiel die Nut 149 auch in der der Werkzeugaufnahme 1 zugewandten Fläche des Einbauflanschs 59 angeordnet sein. Mündungen, aus denen kein Kühl-/Schmiermittel austreten soll, können dann beispielsweise mit Wurmschrauben 147 verschlossen werden, während die Mündungen, aus denen Kühl-/Schmiermittel austreten soll, keine Wurmschrauben 147 oder andere Verschlüsse aufweisen und demnach zugänglich sind.

Es zeigt sich noch, dass das Verteilerelement 105 an seinem unteren Ende einen Außendurchmesser aufweist, der im Wesentlichen dem entsprechenden Innendurchmesser des ersten Abschnitts 73 entspricht. Auf diese Weise liegt das Dichtelement 139 dichtend an der Innenwandung des ersten Abschnitts 73 an, so dass der Ringraum 143 nach unten durch dieses abgedichtet wird. Außerdem wird der Ringraum 143 nach oben durch das am Kopf 109 angeordnete Außengewinde, das mit dem entsprechenden Innengewinde der Werkzeugaufnahme 1 kämmt, abgedichtet. Im Bereich der Schulter 141 ist vorzugsweise ein Freistich 151 angeordnet, in den bei einem nicht dargestellten Ausführungsbeispiel ein Dichtelement eingelegt werden kann. Dieses kann der zusätzlichen Abdichtung des Ringraums 143 nach oben dienen.

Es wird also Folgendes deutlich: Ist die Kühl-/Schmiermittel-Stelleinrichtung 71 in ihrer ersten Funktionsstellung angeordnet, ist eine Fluidverbindung zwischen dem ersten Abschnitt 73 und dem zweiten Abschnitt 79 im Wesentlichen über die Bohrung 117, den Ringraum 127 und die Bohrung 115 freigegeben. Zumindest teilweise strömt das Kühl-/Schmiermittel auch durch den Ringraum 143. Aufgrund dessen kleinen Volumens und sehr kleinen Strömungsquerschnitts ist allerdings die hier strömende Menge vernachlässigbar.

Es zeigt sich weiterhin, dass der Ringraum 127 und auch der Ringraum 143 jeweils durch die Dichtelemente 135 und 139 nach unten abgeschlossen sind, gesperrt ist, so dass kein Kühl-/Schmiermittel von dem ersten Abschnitt 73 in den Hohlraum 57 gelangen kann. In der ersten Funktionsstellung der Kühl-/Schmiermittel-Stelleinrichtung 71 wird also ausschließlich eine dezentrale Versorgung mit Kühl-/Schmiermittel bereitgestellt, während der Zugang zu dem Hohlraum 57, in welchem ein Kühl-/Schmiermittel-Rohr 87 zumindest teilweise angeordnet werden kann, gesperrt ist, so dass in dieser ersten Funktionsstellung eine zentrale Versorgung mit Kühl-/Schmiermittel ausgeschlossen ist.

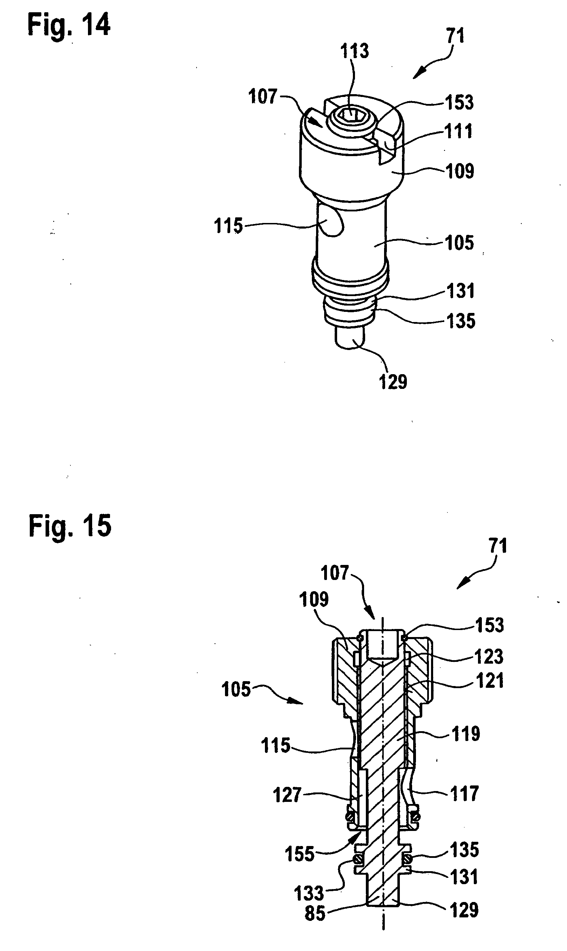

Figur 14 zeigt das Ausführungsbeispiel einer Kühl-/Schmiermittel-Stelleinrichtung 71 gemäß Figur 10, das hier allerdings in seiner zweiten Funktionsstellung angeordnet ist. Gleiche und funktionsgleiche. Elemente sind mit gleichen Bezugszeichen versehen, so dass insofern auf die vorangegangene Beschreibung verwiesen wird. Das Stellglied 107 ist hier relativ zu dem Verteilerelement 105 so weit nach unten verlagert, dass es mit einem Anschlag 153 an der Stirnseite des Kopfs 109 anschlägt. Der Anschlag 153 kann beispielsweise als Sprengring ausgebildet sein, der in eine an dem Stellglied 107 vorgesehene Nut eingelegt wird. In anderen Ausführungsbeispielen ist es auch möglich, den Anschlag 153 einstückig mit dem Stellglied 107 auszubilden, oder ein anderes geeignetes Element, beispielsweise ein Federelement, vorzusehen.

In der dargestellten zweiten Funktionsstellung ragt der Vorsprung 131 mit dem Dichtelement 135 aus dem Verteilerelement 105 heraus.

Die Verlagerung des Stellglieds 107 von der ersten Funktionsstellung in die zweite Funktionsstellung erfolgt vorzugsweise durch eine Betätigung des Betätigungselements 113. Weist das Stellglied 107 ein Außengewinde auf, das mit einem entsprechenden Innengewinde des Verteilerelements 105 kämmt, kann es über das Betätigungselement 113 in das Verteilerelement 105 eingeschraubt werden, um von seiner ersten Funktionsstellung in seine zweite Funktionsstellung zu gelangen. Umgekehrt kann es aus dem Verteilerelement 105 herausgeschraubt werden, um von der zweiten Funktionsstellung in die erste Funktionsstellung zu gelangen. Bei anderen, nicht dargestellten Ausführungsbeispielen sind auch andere Verlagerungsmechanismen möglich. Beispielsweise können mindestens zwei Rastpositionen in dem Verteilerelement 105 für das Stellglied 107 vorgesehen sein, die der ersten beziehungsweise zweiten Funktionsstellung entsprechen. Das Stellglied 107 kann dann gegebenenfalls durch eine ausschließlich axiale Verlagerung oder durch eine Überlagerung einer axialen Verlagerung mit einer Dreh- oder Schwenkbewegung von einer ersten in eine zweite Rastposition verlagert werden. Auch hierzu kann das Betätigungselement 113 verwendet werden.

Figur 15 zeigt einen Längsschnitt durch die Kühl-/Schmiermittel-Stelleinrichtung 71 in ihrer zweiten Funktionsstellung gemäß Figur 14. Gleiche und funktionsgleiche Elemente sind mit gleichen Bezugszeichen versehen, so dass insofern auf die vorangegangene Beschreibung verwiesen wird. In Figur 15 ist erkennbar, dass der Vorsprung 131 vollständig außerhalb des Verteilerelements 105 angeordnet ist. Gleichzeitig ist der obere Bereich 119 des Stellglieds 107 so weit in das Verteilerelement hineinverlagert, dass das an dessen Umfangsfläche angeordnete Außengewinde mit dem an der inneren Umfangsfläche 121 angeordneten Innengewinde auch in einem Bereich kämmt, der - in axialer Richtung gesehen - unterhalb der Bohrung 115 angeordnet ist. Dadurch ist der Ringraum 127 im Vergleich zu der ersten Funktionsstellung, die beispielsweise aus Figur 11 hervorgeht, nach unten verlagert, wobei er durch das an dem Stellglied 107 beziehungsweise der inneren Umfangsfläche 121 angeordnete Gewinde nach oben so abgedichtet wird, dass die Bohrung 115 nicht zugänglich ist. Am unteren Ende des oberen Bereichs 119 kann bei einem nicht dargestellten bevorzugten Ausführungsbeispiel auch ein Dichtelement vorgesehen sein, welches zusätzlich eine Abdichtung des Ringraums 127 nach oben bewirkt. Dieses Dichtelement kann vorzugsweise als Vorsprung, der einstückig mit dem Stellglied 107 ausgebildet ist, oder als separates Dichtelement, beispielsweise als in eine Nut eingelegter O-Ring, ausgebildet sein.

Dadurch, dass der Vorsprung 131 vollständig außerhalb des Verteilerelements 105 angeordent ist, so dass auch das Dichtelement 135 an dessen Innenwandung nicht dichtend anliegt, weist der Ringraum 127 an seinem unteren Ende eine Öffnung 155 auf.

Erkennbar ist noch das Ende 129 des unteren Bereichs 125 des Stellglieds 107, das als Ansatz 85 ausgebildet ist, was im Folgenden erläutert wird.

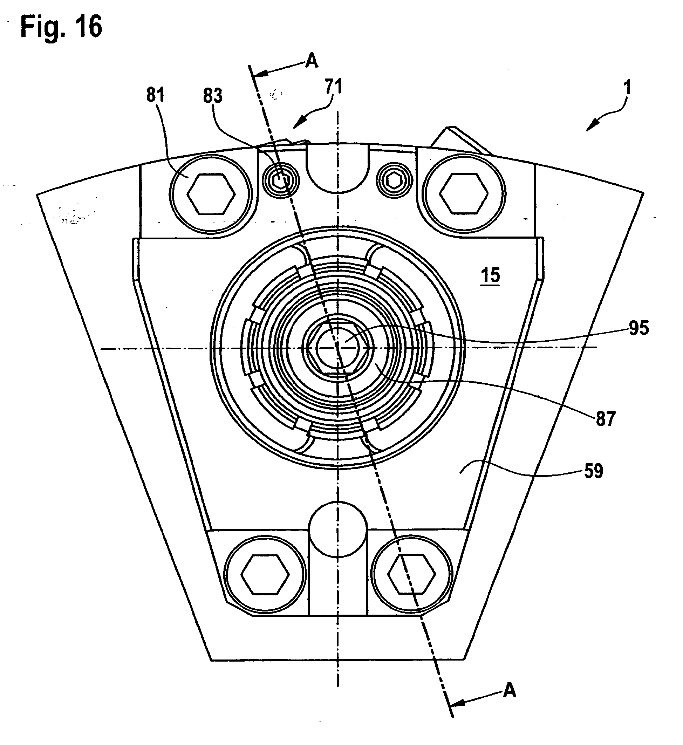

Figur 16 zeigt eine Stirnansicht eines weiteren Ausführungsbeispiels einer Werkzeugaufnahme 1. Gleiche und funktionsgleiche Elemente sind mit gleichen Bezugszeichen versehen, so dass insofern auf die vorangegangene Beschreibung verwiesen wird. In der hier dargestellten Werkzeugaufnahme 1 ist eine Kühl-/Schmiermittel-Stelleinrichtung 71 vorgesehen, die gemäß den Figuren 14 und 15 ausgebildet und in ihrer zweiten Funktionsstellung angeordnet ist. Erkennbar ist außerdem, dass ein Kühl-/Schmiermittel-Rohr 87 in bereits in Zusammenhang mit Figur 5 beschriebener Weise in der Werkzeugaufnahme 1 angeordnet ist. Dieses weist ein Inneres 95 auf, das hohl ist und das Kühl-/Schmiermittel-Rohr 87 in bereits beschriebener Weise von dessen dem Einbauflansch 59 zugewandten Stirnseite bis zu einem hier nicht dargestellten geschlossenen Ende 89 durchsetzt.

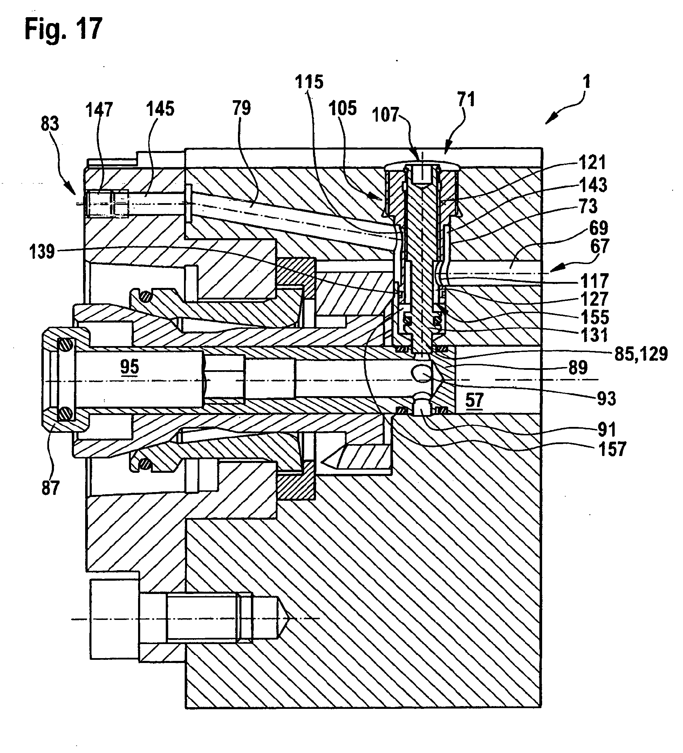

Figur 17 zeigt eine Schnittansicht durch die Werkzeugaufnahme 1 aus Figur 16 entlang der Linie A-A. Gleiche und funktionsgleiche Elemente sind mit gleichen Bezugszeichen versehen, so dass insofern auf die vorangegangene Beschreibung verwiesen wird. Hier ist das geschlossene Ende 89 des Kühl-/Schmiermittel-Rohrs 87 zu erkennen, bis zu der sich das hohle Innere 95 erstreckt.

Die Kühl-/Schmiermittel-Stelleinrichtung 71 ist hier in gleicher Weise in der Werkzeugaufnahme 1 fixiert, wie es in Zusammenhang mit Figur 13 beschrieben wurde. Insofern wird auf die dortige Beschreibung verwiesen. Hier ist sie allerdings in ihrer zweiten Funktionsstellung angeordnet, so dass also das Stellglied 107 relativ zu dem Verteilerelement 105 maximal weit - das heißt bis zu der Begrenzung durch den Anschlag 153 - nach unten verlagert ist. Wie bereits in Zusammenhang mit Figur 15 beschrieben, ist der Ringraum 127 durch das an dem Stellglied 107 und der inneren Umfangsfläche 121 angeordnete Gewinde nach oben in einem Bereich unterhalb der Bohrung 115 abgedichtet, so dass diese vom Ringraum 127 aus nicht zugänglich ist. Stattdessen ist eine Öffnung 155 freigegeben, weil der Vorsprung 131 vollständig außerhalb des Verteilerelements 105 angeordnet ist.

Wie bereits gesagt, fungiert das Ende 129 hier als Ansatz 85, der sich bis in eine Ringnut 91 des Kühl-/Schmiermittel-Rohrs 87 erstreckt und dieses in dessen axialer Richtung fixiert.

In der dargestellten Funktionsstellung der Kühl-/Schmiermittel-Stelleinrichtung 71 strömt Kühl-/Schmiermittel von dem Kühl-/Schmiermittel-Kanal 69 in den ersten Abschnitt 73 der Kühl-/Schmiermittelversorgung 67 und insbesondere durch die Bohrung 117 in den Ringraum 127 der Kühl-/Schmiermittel-Stelleinrichtung 71. Wie bereits beschrieben, ist dieser nach oben gegenüber der Bohrung 115 geschlossen, so dass hier kein Kühl-/Schmiermittel hingelangen kann. Dieses strömt also durch die Öffnung 155 in einen unteren Bereich 157 des ersten Abschnitts 73. Von diesem gelangt das Kühl-/Schmiermittel in einer Weise, die bereits in Zusammenhang mit den Figuren 5 und 6 beschrieben wurde, in die Ringnut 91, in der mindestens eine Bohrung 93 vorgesehen ist, über die das Küht-/Schmiermittel in das Innere 95 des Kühl-/Schmiermittel-Rohrs 87 gelangen kann.

Der untere Bereich 157 des ersten Abschnitts 73 ist gegenüber dem Ringraum 143 durch das Dichtelement 139 abgedichtet, so dass hier kein Kühl-/Schmiermittel zurückströmen kann.

Aufgrund des Verhältnisses der Strömungsquerschnitte der Bohrung 117 einerseits und des Ringraums 143 andererseits gelangt nur wenig Kühl-/Schmiermittel in den Ringraum 143. Dieses kann allerdings gegebenenfalls in den zweiten Abschnitt 79 und damit auch zur Bohrung 145 beziehungsweise zur Mündung 83 gelangen. Im Regelfall wird allerdings hier nur wenig oder gar kein Kühl-/Schmiermittel austreten, weil ein zu kleiner Bruchteil des Kühl-/Schmiermittelstroms in den Ringraum 143 eintritt. Um dennoch einen Austritt von Kühl-/Schmiermittel aus der Mündung 83 vollständig und sicher zu verhindern, kann diese in bereits beschriebener Weise verschlossen werden, beispielsweise mit einer Wurmschraube 147.

In einem nicht dargestellten anderen Ausführungsbeispiel ist es auch möglich, den Außendurchmesser des Verteilerelements 105 so an den ersten Bereich 73 anzupassen, dass kein Ringraum 143 ausgebildet ist. In diesem Fall kann eine Kühl-/Schmiermittel-Strömung ausschließlich über die Bohrungen 117 und 115 beziehungsweise die Öffnung 155 erfolgen, so dass insbesondere in der zweiten Funktionsstellung der Kühl-/Schmiermittel-Stelleinrichtung 71 keinerlei Kühl-/Schmiermittel in den zweiten Abschnitt 79 gelangen kann.

Es wird also Folgendes klar: In der zweiten Funktionsstellung wird eine Fluidverbindung zwischen dem ersten Abschnitt 73 und dem Kühl-/Schmiermittel-Rohr 87 über die Bohrung 117, den Ringraum 127, die Öffnung 155, den unteren Bereich 157, die Ringnut 91 und die mindestens eine Bohrung 93 freigegeben. Kühl-/Schmiermittel kann also von dem Kühl-/Schmiermittel-Kanal 69 in das Innere 95 des Kühl-/Schmiermittel-Rohrs 87 strömen und steht so für eine zentrale Kühl-/Schmiermittel-Versorgung zur Verfügung. Gleichzeitig wird eine Kühl-/Schmiermittel-Strömung zu dem zweiten Abschnitt 79 nahezu oder vorzugsweise vollständig verhindert, so dass eine Fluidverbindung zwischen dem ersten Abschnitt 73 und diesem zweiten Abschnitt 79 gesperrt ist. Eine dezentrale Kühl-/Schmiermittel-Versorgung ist in der zweiten Funktionsstellung der Kühl-/Schmiermittel-Stelleinrichtung 71 also ausgeschlossen.

Nach allem zeigt sich, dass bei allen hier beschriebenen Ausführungsbeispielen einer Werkzeugaufnahme 1 eine Kühl-/Schmiermittel-Stelleinrichtung 71 verwendet werden kann, die ein einfaches Umschalten zwischen einer zentralen oder einer dezentralen Kühl-/Schmiermittel-Versorgung gewährleistet. Dieses Ausführungsbeispiel einer Kühl-/Schmiermittel-Stelleinrichtung 71 muss dann für ein Umschalten der Versorgung nicht ausgetauscht werden, sondern es kann in einfacher Weise von einer ersten Funktionsstellung in eine zweite Funktionsstellung oder umgekehrt gebracht werden, wobei die beiden Funktionsstellungen jeweils einer Versorgungsart entsprechen. Hierdurch ist eine Umstellung der Versorgung sehr viel schneller und unkomplizierter möglich als dies der Fall ist, wenn für jede Versorgungsart jeweils eine Kühl-/Schmiermittel-Stelleinrichtung 71 vorgesehen sein muss. Außerdem entfällt die Aufbewahrung jeweils einer solchen Stelleinrichtung, die demnach auch nicht verloren gehen kann.

Auf einfache Weise ist es bei beiden Ausführungsformen der Werkzeugaufnahme 1 auch möglich, durch die hohle Zugstange 13 ein beispielsweise als Antriebswelle ausgebildetes Betätigungselement zu führen und eine Schneide eines in die Werkzeugaufnahme 1 eingesetzten Werkzeugs in Rotation zu versetzen.

Besonders vorteilhaft ist eben, dass die Werkzeugaufnahme 1 sehr kurz ausgestaltet werden kann, weil die Betätigungseinrichtung 27 auf eine Seitenfläche der Zugstange 13 einwirkt, sodass deren im Inneren der Werkzeugaufnahme 1 liegendes freies Ende 29 offen ausgebildet sein kann und für ein Betätigungselement zugänglich ist. Ohne Weiteres ist es auch möglich, in die hohle Zugstange 13 ein Kühl-/Schmiermittel-Rohr 87 einzuführen und axial zu fixieren, um eine zentrale Kühl-/Schmiermittel-Zufuhr zu realisieren.

In allen Fällen zeigt sich, dass eine kurze Bauform und auch ein zentraler Durchgriff durch die Werkzeugaufnahme 1 realisierbar sind.

## Patentansprüche

1. Werkzeugaufnahme umfassend eine Hohlschaftkegel-Spannvorrichtung mit
- einer Mittelachse (9),
- einer Spanneinrichtung (5) mit mindestens einer Spannzange (7), die in den Hohlschaft eines Werkzeugs einführbar ist,
- einer in Richtung der Mittelachse (9) beweglichen Zugstange (13), die mit der mindestens einen Spannzange (7) so zusammenwirkt, dass die mindestens eine Spannzange (7) in einer ersten Funktionsstellung der Zugstange (13) radial nach außen in eine Spannposition gedrängt wird und in einer zweiten Funktionsstellung der Zugstange (13) radial nach innen in Richtung zur Mittelachse (9) ausweichen kann, und
- einer mit der Zugstange (13) zusammenwirkenden Betätigungseinrichtung (27), wobei
- die Betätigungseinrichtung (27) ein unter einem Winkel von vorzugsweise 90° zur Mittelachse (9) bewegliches Betätigungselement (31) aufweist, das mindestens ein Betätigungsteil (33) umfasst,
- die Zugstange (13) mindestens ein Eingriffsteil (99) aufweist, **dadurch gekennzeichnet, dass**
- das Betätigungsteil (33) und das Eingriffsteil (99) ein Keilgetriebe bilden, so dass das Betätigungsteil (33) bei radialer Verlagerung des Betätigungselements (31) eine axiale Verschiebung der Zugstange (13) bewirkt.

2. Werkzeugaufnahme nach Anspruch 1, **dadurch gekennzeichnet, dass** das Keilgetriebe doppelwirkend ausgebildet ist.

3. Werkzeugaufnahme nach Anspruch 1 oder 2, **dadurch gekennzeichnet, dass** das Betätigungselement (31) seitlich an der Zugstange (13) angreift.

4. Werkzeugaufnahme nach einem der vorhergehenden Ansprüche, **dadurch gekennzeichnet, dass** das Betätigungselement (31) einen - vorzugsweise radial zur Mittelachse (9) ausgerichteten -, zwei parallel zueinander verlaufende Innenflächen (103) aufweisenden Aufnahmeschlitz (101) umfasst, in dem die Zugstange (13) anordenbar ist, wobei an mindestens einer Innenfläche (103) ein Betätigungsteil (33) vorgesehen ist, das mit einem Eingriffsteil (99) an der Zugstange (13) zusammenwirkt.

5. Werkzeugaufnahme nach Anspruch 4, **dadurch gekennzeichnet, dass** an beiden Innenflächen (103) ein Betätigungsteil (33) vorgesehen ist.

6. Werkzeugaufnahme nach einem der vorhergehenden Ansprüche, **dadurch gekennzeichnet, dass** die Betätigungseinrichtung (27) eine Gewindespindel (35) aufweist, die einerseits in das Betätigungselement (31) und andererseits in die Werkzeugaufnahme (1) eingreift.

7. Werkzeugaufnahme nach Anspruch 6, **gekennzeichnet durch** ein in die Werkzeugaufnahme (1) einbringbares Gewindeelement (37), das ein Innengewinde für die Gewindespindel (35) umfasst und das vorzugsweise als Gewindering mit einem Außengewinde ausgebildet ist.

8. Werkzeugaufnahme nach einem der vorhergehenden Ansprüche, **gekennzeichnet durch** eine Kühl-/Schmiermittel-Zufuhr (67).

9. Werkzeugaufnahme nach Anspruch 8, **dadurch gekennzeichnet, dass** eine Kühl-/Schmiermittel-Stelleinrichtung (71) vorgesehen ist.

10. Werkzeugaufnahme nach einem der vorhergehenden Ansprüche, **dadurch gekennzeichnet, dass** die Zugstange (13) hohl ausgebildet ist.

11. Werkzeugaufnahme nach Anspruch 10, **dadurch gekennzeichnet, dass** durch die hohle Zugstange (13) ein Betätigungselement hindurchführbar ist.

12. Werkzeugaufnahme nach Anspruch 10, **gekennzeichnet durch** ein in die Zugstange (13) einsetzbares, koaxial zur Mittelachse (9) verlaufendes Kühl-/Schmiermittel-Rohr (87).

13. Werkzeugaufnahme nach Anspruch 12, **dadurch gekennzeichnet, dass** die Kühl-/Schmiermittel-Stelleinrichtung (71) als Fixiereinrichtung ausgelegt ist, die in das innenliegende Ende (89) des Kühl-/Schmiermittel-Rohrs (87) eingreift.

14. Werkzeugaufnahme nach Anspruch 13, **dadurch gekennzeichnet, dass** die Fixiereinrichtung im Wesentlichen senkrecht zur Mittelachse 9 angeordnet ist.

15. Werkzeugaufnahme nach Anspruch 9, **dadurch gekennzeichnet, dass** die Kühl-/Schmiermittel-Stelleinrichtung (71) in einem Kühl-/Schmiermittel-Kanal (69) der Kühl-/Schmiermittel-Zufuhr (67) angeordnet ist.

16. Werkzeugaufnahme nach Anspruch 15, **dadurch gekennzeichnet, dass** der Kühl-/Schmiermittel-Kanal (69) einen ersten Abschnitt (73) aufweist, der zu einer Aufnahme in der Werkzeugaufnahme führt, welche ein in die hohl ausgebildete Zugstange (13) einsetzbares, koaxial zur Mittelachse (9) verlaufendes Kühl-/Schmiermittel-Rohr (87) aufnimmt.

17. Werkzeugaufnahme nach Anspruch 15 oder 16, **dadurch gekennzeichnet, dass** der Kühl-/Schmiermittel-Kanal (69) einen zweiten Abschnitt (79) aufweist, der zu einer Stirnseite (15) der Werkzeugaufnahme (1) führt, in die ein Werkzeug mit Hohlschaftkegel einführbar ist.

18. Werkzeugaufnahme nach Anspruch 17, **dadurch gekennzeichnet, dass** die Kühl-/Schmiermittel-Stelleinrichtung (71) derart ausgebildet ist, dass durch sie eine Fluidverbindung zwischen dem ersten Abschnitt (73) und einem Hohlraum (57) verschließbar ist, während eine Fluidverbindung zwischen dem ersten Abschnitt (73) und dem zweiten Abschnitt (79) freigebbar ist.

19. Werkzeugaufnahme nach Anspruch 17, **dadurch gekennzeichnet, dass** die Kühl-/Schmiermittel-Stelleinrichtung (71) derart ausgebildet ist, dass durch sie eine Fluidverbindung zwischen dem ersten Abschnitt (73) und dem Kühl-/Schmiermittel-Rohr (87) freigebbar ist, während eine Fluidverbindung zwischen dem ersten Abschnitt (73) und dem zweiten Abschnitt (79) verschließbar ist.

20. Werkzeugaufnahme nach Anspruch 17, **dadurch gekennzeichnet, dass** die Kühl-/Schmiermittel-Stelleinrichtung (71) im wesentlichen zwei Funktionsstellungen aufweist, wobei
- in einer ersten Funktionsstellung eine Fluidverbindung zwischen dem ersten Abschnitt (73) und einem Hohlraum (57) verschließbar ist, während eine Fluidverbindung zwischen dem ersten Abschnitt (73) und dem zweiten Abschnitt (79) freigebbar ist, und wobei
- in einer zweiten Funktionsstellung die Fluidverbindung zwischen dem ersten Abschnitt (73) und dem Kühl-/Schmiermittel-Rohr (87) freigebbar ist, während die Fluidverbindung zwischen dem ersten Abschnitt (73) und dem zweiten Abschnitt (79) verschließbar ist.

21. Werkzeugaufnahme nach einem der vorhergehenden Ansprüche, **gekennzeichnet durch** eine Führungseinrichtung, welche die Zugstange (13) in der Werkzeugaufnahme (1) radial abstützt.

22. Werkzeugaufnahme nach einem der vorhergehenden Ansprüche, **gekennzeichnet durch** einen Einbauflansch (59), mit dem die Hohlschaftkegel-Spannvorrichtung in der Werkzeugaufnahme (1) fixierbar ist.

23. Werkzeugaufnahme nach einem der vorhergehenden Ansprüche, **dadurch gekennzeichnet, dass** die Werkzeugaufnahme (1) mehrere Hohlschaftkegel-Spannvorrichtungen (3) aufweist.

24. Werkzeugaufnahme nach einem der vorhergehenden Ansprüche, **dadurch gekennzeichnet, dass** diese als Trommel-Revolver ausgebildet ist.

25. Werkzeugaufnahme nach einem der Ansprüche 1 bis 24, **dadurch gekennzeichnet, dass** sie als Sternrevolver ausgebildet ist.

## Claims

1. Tool holder comprising a hollow taper shank chucking device having
- a center axis (9),
- a chucking device (5) having at least one collet chuck (7) which may be inserted into the hollow shaft of a tool,
- a tension rod (13) which is movable in the direction of the center axis (9) and which cooperates with the at least one collet chuck (7) in such a way that in a first function position of the tension rod (13) the at least one collet chuck (7) is pushed radially outwardly into a chucking position, and in a second function position of the tension rod (13) the at least one collet chuck is able to yield radially inwardly in the direction of the center axis (9), and
- an actuating unit (27) which cooperates with the tension rod (13),
- the actuating unit (27) has an actuating element (31) which is movable at an angle of preferably 90° relative to the center axis (9), and which includes at least one actuating part (33),
- the tension rod (13) has at least one engagement part (99), **characterized in that**
- the actuating part (33) and the engagement part (99) form a wedge gear, so that the actuating part (33) causes an axial displacement of the tension rod (13) when the actuating element (31) is radially displaced.

2. Tool holder according to claim 1, **characterized in that** the wedge gear has a double-acting design.

3. Tool holder according to claim 1 or 2, **characterized in that** the actuating element (31) laterally engages the tension rod (13).

4. Tool holder according to one of the preceding claims, **characterized in that** the actuating element (31) includes a receiving slot (101) that has two inner faces (103) which are parallel to one another and that is preferably oriented radially with respect to the center axis (9), in which the tension rod (13) may be situated, an actuating part (33) being provided at at least one inner face (103) which cooperates with an engagement part (99) at the tension rod (13).

5. Tool holder according to claim 4, **characterized in that** an actuating part (33) is provided at both inner faces (103).

6. Tool holder according to one of the preceding claims, **characterized in that** the actuating unit (27) has a threaded spindle (35) which on the one hand engages in the actuating element (31) and on the other hand engages in the tool holder (1).

7. Tool holder according to claim 6, **characterized by** a threaded element (37) which may be introduced into the tool holder (1) and which includes an internal thread for the threaded spindle (35) and is preferably designed as a threaded ring having an external thread.

8. Tool holder according to one of the preceding claims, **characterized by** a coolant/lubricant supply (67).

9. Tool holder according to claim 8, **characterized in that** a coolant/lubricant control unit (71) is provided.

10. Tool holder according to one of the preceding claims, **characterized in that** the tension rod (13) has a hollow design.

11. Tool holder according to claim 10, **characterized in that** an actuating element may be passed through the hollow tension rod (13).

12. Tool holder according to claim 10, **characterized by** a coolant/lubricant tube (87) which may be inserted in the tension rod (13) and which extends coaxially with respect to the center axis (9).

13. Tool holder according to claim 12, **characterized in that** the coolant/lubricant control unit (71) is designed as a fixing device which engages in the interior end (89) of the coolant/lubricant tube (87).

14. Tool holder according to claim 13, **characterized in that** the fixing device is situated essentially perpendicular to the center axis (9).

15. Tool holder according to claim 9, **characterized in that** the coolant/lubricant control unit (71) is situated in a coolant/lubricant channel (69) of the coolant/lubricant supply (67).

16. Tool holder according to claim 15, **characterized in that** the coolant/lubricant channel (69) has a first section (73) which leads to a receptacle in the tool holder that accommodates a coolant/lubricant tube (87) which may be inserted into the hollow tension rod (13) and which extends coaxially with respect to the center axis (9).

17. Tool holder according to claim 15 or 16, **characterized in that** the coolant/lubricant channel (69) has a second section (79) which leads to an end face (15) of the tool holder (1) into which a tool having a hollow taper shank may be inserted.

18. Tool holder according to claim 17, **characterized in that** the coolant/lubricant control unit (71) is designed in such a way that a fluid connection between the first section (73) and a cavity (57) may be closed by the coolant/lubricant control unit, while a fluid connection between the first section (73) and the second section (79) may be enabled.

19. Tool holder according to claim 17, **characterized in that** the coolant/lubricant control unit (71) is designed in such a way that a fluid connection between the first section (73) and the coolant/lubricant tube (87) may be enabled by the coolant/lubricant control unit, while a fluid connection between the first section (73) and the second section (79) may be closed.

20. Tool holder according to claim 17, **characterized in that** the coolant/lubricant control unit (71) has essentially two function positions, wherein
- in a first function position a fluid connection between the first section (73) and a cavity (57) may be closed, while a fluid connection between the first section (73) and the second section (79) may be enabled, and wherein
- in a second function position the fluid connection between the first section (73) and the coolant/lubricant tube (87) may be enabled, while the fluid connection between the first section (73) and the second section (79) may be closed.

21. Tool holder according to one of the preceding claims, **characterized by** a guide unit which radially supports the tension rod (13) in the tool holder (1).

22. Tool holder according to one of the preceding claims, **characterized by** a mounting flange (59) by means of which the hollow taper shank chucking device may be fixed in the tool holder (1).

23. Tool holder according to one of the preceding claims, **characterized in that** the tool holder (1) has multiple hollow taper shank chucking devices (3).

24. Tool holder according to one of the preceding claims, **characterized in that** the tool holder is designed as a drum turret.

25. Tool holder according to one of claims 1 through 24, **characterized in that** the tool holder is designed as a star turret.

## Revendications

1. Logement d'outil comprenant un dispositif de serrage à cône HSK avec
- un axe médian (9),
- une installation de serrage (5) avec au moins une pince de serrage (7) qui peut être introduite dans l'arbre creux d'un outil,
- une barre de traction (13) mobile en direction de l'axe médian (9) qui coopère avec l'au moins une pince de serrage (7) de sorte que l'au moins une pince de serrage (7) est poussée, dans une première position fonctionnelle de la barre de traction (13), radialement vers l'extérieur dans une position de serrage et peut éviter, dans une seconde position fonctionnelle de la barre de traction (13), radialement vers l'intérieur en direction de l'axe médian (9), et
- un dispositif d'actionnement (27) coopérant avec la barre de traction (13), dans lequel
- le dispositif d'actionnement (27) présente un élément d'actionnement (31) mobile par rapport à l'axe médian (9) à un angle de préférence de 90° qui comprend au moins une partie d'actionnement (33),
- la barre de traction (13) présente au moins une partie d'engrènement (99), **caractérisé en ce que**
- la partie d'actionnement (33) et la partie d'engrènement (99) forment un engrenage à cale de sorte que la partie d'actionnement (33) entraîne un coulissement axial de la barre de traction (13) en cas de déplacement radial de l'élément d'actionnement (31).

2. Logement d'outil selon la revendication 1, **caractérisé en ce que** l'engrenage à cale est réalisé à double action.

3. Logement d'outil selon la revendication 1 ou 2, **caractérisé en ce que** l'élément d'actionnement (31) est appliqué latéralement sur la barre de traction (13).

4. Logement d'outil selon une des revendications précédentes, **caractérisé en ce que** l'élément d'actionnement (31) comprend une fente de réception (101) orientée de préférence radialement par rapport à l'axe médian (9), présentant deux faces internes (103) s'étendant parallèlement l'une à l'autre dans laquelle la barre de traction (13) peut être disposée, dans lequel une partie d'actionnement (33) qui coopère avec une partie d'engrènement (99) sur la barre de traction (13) est prévue sur au moins une face interne (103).

5. Logement d'outil selon la revendication 4, **caractérisé en ce qu'**une partie d'actionnement (33) est prévue sur les deux faces internes (103).

6. Logement d'outil selon une des revendications précédentes, **caractérisé en ce que** le dispositif d'actionnement (27) présente une broche filetée (35) qui s'engrène d'un côté dans l'élément d'actionnement (31) et de l'autre côté dans le logement d'outil (1).

7. Logement d'outil selon la revendication 6, **caractérisé par** un élément fileté (37) pouvant être introduit dans le logement d'outil (1) qui comprend un filetage interne pour la broche filetée (35) et qui est de préférence réalisé en tant qu'anneau fileté avec un filetage externe.

8. Logement d'outil selon une des revendications précédentes, **caractérisé par** une amenée de réfrigérant/lubrifiant (67).

9. Logement d'outil selon la revendication 8, **caractérisé en ce qu'**un dispositif de réglage de réfrigérant/lubrifiant (71) est prévu.

10. Logement d'outil selon une des revendications précédentes, **caractérisé en ce que** la barre de traction (13) est réalisée de manière creuse.

11. Logement d'outil selon la revendication 10, **caractérisé en ce qu'**un élément d'actionnement peut être traversé par la barre de traction creuse (13).

12. Logement d'outil selon la revendication 10, **caractérisé par** un tuyau de réfrigérant/lubrifiant (87) pouvant être inséré dans la barre de traction (13), s'étendant de manière coaxiale à l'axe médian (9).

13. Logement d'outil selon la revendication 12, **caractérisé en ce que** le dispositif de réglage de réfrigérant/lubrifiant (71) est conçu en tant que dispositif de fixation qui s'engrène dans l'extrémité interne (89) du tuyau de réfrigérant/lubrifiant (87).

14. Logement d'outil selon la revendication 13, **caractérisé en ce que** le dispositif de fixation est disposé essentiellement perpendiculairement à l'axe médian (9).

15. Logement d'outil selon la revendication 9, **caractérisé en ce que** le dispositif de réglage de réfrigérant/lubrifiant (71) est disposé dans un canal de réfrigérant/lubrifiant (69) de l'amenée de réfrigérant/lubrifiant (67).

16. Logement d'outil selon la revendication 15, **caractérisé en ce que** le canal de réfrigérant/lubrifiant (69) présente une première section (73) qui conduit à un logement dans le logement d'outil qui reçoit un tuyau de réfrigérant/lubrifiant (87) pouvant être inséré dans la barre de traction (13) réalisée de manière creuse, s'étendant de manière coaxiale à l'axe médian (9).

17. Logement d'outil selon la revendication 15 ou 16, **caractérisé en ce que** le canal de réfrigérant/lubrifiant (69) présente une seconde section (79) qui conduit à un côté frontal (15) du logement d'outil (1) dans lequel un outil avec cône HSK peut être introduit.

18. Logement d'outil selon la revendication 17, **caractérisé en ce que** le dispositif de réglage de réfrigérant/lubrifiant (71) est réalisé de telle sorte qu'une connexion fluidique entre la première section (73) et un espace creux (57) peut être fermée par lui tandis qu'une connexion fluidique entre la première section (73) et la seconde section (79) peut être libérée.

19. Logement d'outil selon la revendication 17, **caractérisé en ce que** le dispositif de réglage de réfrigérant/lubrifiant (71) est réalisé de telle sorte qu'une connexion fluidique entre la première section (73) et le tuyau de réfrigérant/lubrifiant (87) peut être libérée par lui tandis qu'une connexion fluidique entre la première section (73) et la seconde section (79) peut être fermée.

20. Logement d'outil selon la revendication 17, **caractérisé en ce que** le dispositif de réglage de réfrigérant/lubrifiant (71) présente essentiellement deux positions fonctionnelles, dans lequel
- une connexion fluidique entre la première section (73) et un espace creux (57) peut être fermée tandis qu'une connexion fluidique entre la première section (73) et la seconde section (79) peut être libérée dans une première position fonctionnelle, et dans lequel
- la connexion fluidique entre la première section (73) et le tuyau de réfrigérant/lubrifiant (87) peut être libérée tandis que la connexion fluidique entre la première section (73) et la seconde section (79) peut être fermée dans une seconde position fonctionnelle.

21. Logement d'outil selon une des revendications précédentes, **caractérisé par** un dispositif de guidage qui soutient radialement la barre de traction (13) dans le logement d'outil (1).

22. Logement d'outil selon une des revendications précédentes, **caractérisé par** une bride de montage (59) avec laquelle le dispositif de serrage à cône HSK peut être fixé dans le logement d'outil (1).

23. Logement d'outil selon une des revendications précédentes, **caractérisé en ce que** le logement d'outil (1) présente plusieurs dispositifs de serrage à cône HSK (3).

24. Logement d'outil selon une des revendications précédentes, **caractérisé en ce que** celui-ci est réalisé en tant que revolver à barillet.

25. Logement d'outil selon une des revendications 1 à 24, **caractérisé en ce qu'**il est réalisé en tant que tourelle revolver.
